# EUROPÄISCHE PATENTSCHRIFT

(11) **EP 3 938 651 B1**
(45) Veröffentlichungstag und Bekanntmachung des Hinweises auf die Patenterteilung: **03.07.2024**
(21) Anmeldenummer: 20711827.4
(22) Anmeldetag: 06.03.2020
(51) Int. Cl.: F03D 80/40

(54) **VERFAHREN ZUM ERKENNEN EINES EISANSATZES AN EINER WINDENERGIEANLAGE**
METHOD FOR DETECTING THE ACCRETION OF ICE ON A WIND TURBINE
PROCÉDÉ DE DÉTECTION DE L'ACCUMULATION DE GLACE SUR UNE ÉOLIENNE

(30) Priorität: 11.03.2019 DE 102019106073
(43) Veröffentlichungstag der Anmeldung: 19.01.2022
(73) Patentinhaber: Wobben Properties GmbH, 26607 Aurich (DE)
(72) Erfinder: MESSING, Ralf, 26605 Aurich (DE); SENFTLEBEN, Daniel, 26603 Aurich (DE)
(74) Vertreter: Eisenführ Speiser
(86) Internationale Anmeldenummer: PCT/EP2020/056026
(87) Internationale Veröffentlichungsnummer: WO 2020/182661

(56) Entgegenhaltungen:
- DE-A1-102010 015 595
- US-A1- 2011 089 692
- US-A1- 2012 226 485
- US-A1- 2013 106 108
- US-A1- 2015 292 486

## Beschreibung

Die vorliegende Erfindung betrifft ein Verfahren zum Erkennen eines Eisansatzes an einem Rotorblatt eines Rotors einer Windenergieanlage. Die vorliegende Erfindung betrifft auch eine Windenergieanlage, die ein entsprechendes Verfahren einsetzt.

Windenergieanlagen sind bekannt, sie erzeugen elektrische Leistung aus Wind. Dazu verwenden sie einen Rotor mit wenigstem einem Rotorblatt, meist mit drei Rotorblättern, die ein aerodynamisches Profil aufweisen und durch den Wind angetrieben werden. Je nach Aufstellungsort kann es zu Witterungsbedingungen kommen, bei denen sich ein Eisansatz am Rotorblatt bilden kann. Ein solcher Eisansatz kann das aerodynamische Verhalten des Rotorblattes verändern, meist verschlechtern. Je nach Aufstellungsort kann von einem solchen Eisansatz auch eine Gefahr durch Eiswurf ausgehen.

Windenergieanlagen werden somit auch in Regionen und Standorten betrieben, an denen es aufgrund der Umgebungsbedingungen zur Eisbildung an den Rotorblättern kommt. Üblicherweise sind solche Anlagen mit Blattheizungen ausgestattet, sodass die Blätter beheizt werden können, um der unerwünschten Eisbildung an den Rotorblättern entgegen zu wirken. Um die Beheizung der Rotorblätter auszulösen, bedarf es einer möglichst zuverlässigen Eiserkennung an den Rotorblättern.

Ein mögliches Verfahren, um einen Eisansatz zu erkennen, ist ein sogenanntes Leistungskurvenverfahren. Beim Leistungskurvenverfahren macht man sich den Umstand zu Nutze, dass die Eisbildung am Rotorblatt die aerodynamischen Eigenschaften der Rotorblattprofile stark beeinträchtigt. Üblicherweise führt die Eisbildung zu einer Verschlechterung des Auftriebsbeiwertes und zu einer Erhöhung des Widerstandsbeiwertes, beides führt in Folge zu einer Verschlechterung der Gleitzahl am Rotorblattprofil. Alle genannten Effekte führen in Summe zu einer Verringerung des aerodynamischen Leistungsbeiwertes des Rotorblattes und insgesamt zu einer verringerten Leistungsabgabe der Anlage. Daran kann der Eisansatz erkannt werden.

Treten also Witterungsbedingungen ein, die aus meteorologischer Sicht eine Eisbildung möglich erscheinen lassen, so kann die gemessene Leistung als Indikator zur Eisbildung an den Rotorblättern herangezogen werden. Das kann so ausgeführt werden, dass die aktuell erfasste Leistungskurve mit einer Referenzleistungskurve verglichen wird, die unter Umgebungsbedingungen erfasst wurde, bei denen Eisbildung mit Sicherheit ausgeschlossen werden konnte. Weicht also die aktuell erfasste Leistungskurve unter Umgebungsbedingungen, die Eisbildung möglich erscheinen lassen, von der Referenzleistungskurve um einen definierten Schwellenwert ab, so wird Eisbildung an den Rotorblättern angenommen und Maßnahmen eingeleitet, wie zum Beispiel das Anhalten der Anlage und Starten eines Heizbetriebes, um das an den Rotorblättern angesetzte Eis abzutauen.

Ein solches Verfahren ist bspw. in dem Patent US 7857586 beschrieben.

Sowohl das Anhalten der Anlage als auch das Starten eines Heizbetriebs stellt aber einen erheblichen Eingriff in den Betrieb der Anlage dar und kann zu erheblichen Leistungseinbußen führen. Fehlerkennung eines Eisansatzes, bei denen von einem Eisansatz ausgegangen wird und die genannten Maßnahmen eingeleitet werden, obwohl tatsächlich keine Eisbildung vorlag, sollten dann möglichst vermieden werden. Andererseits sollten die genannten Maßnahmen aber eingeleitet werden, wenn tatsächlich ein Eisansatz vorliegt. Somit wäre jedenfalls eine Erhöhung der Ansprechschwelle, ab der ein Eisansatz erkannt wird, nicht uneingeschränkt wünschenswert, denn dann würde auch so mancher Eisansatz nicht erkannt werden.

Es ist zudem zu beachten, dass Kriterien für einen Eisansatz variieren können, bspw. abhängig der konkreten Windenergieanlage oder abhängig des konkreten Aufstellungsortes. Das kann zusätzlich dazu führen, dass das genannte Verfahren zu Fehleinschätzung führen kann.

Das Deutsche Patent- und Markenamt hat in der Prioritätsanmeldung zur vorliegenden Anmeldung folgenden Stand der Technik recherchiert: US 7 857 586 B2, EP 3 421 784 A1, WO 2011/ 131 522 A2. Als weiterer Stand der Technik wird hingewiesen auf die Dokumente DE 10 2010 015595 A1, US 2015/292486 A1, US 2011/089692 A1 sowie US 2012/226485 A1. In DE 10 2010 015595 A1 ist ein Verfahren zum Erkennen eines Eisansatzes beschrieben, wobei bei einer kritischen Abweichung zu einer Referenzgröße ein Eisansatz erkannt wird. In US 2015/292486 A1 ist ein Verfahren zum Erkennen auf Eisansatz offenbart, bei dem neben einem Leistungsvergleich auch Umgebungsvariablen berücksichtigt werden. US 2011/089692 A1 beschreibt ein Verfahren zum Steuern einer Windenergieanlage, bei dem eine generelle Vereisungswahrscheinlichkeit berechnet wird. US 2012/226485 A1 beschreibt ein Verfahren zur Bestimmung einer Vereisungswahrscheinlichkeit auf Grundlage einer logistischen Regressionsfunktion.

Der vorliegenden Erfindung liegt somit die Aufgabe zugrunde, zumindest eins der o.g. Probleme zu adressieren. Insbesondere soll eine Lösung zum Erkennen eines Eisansatzes vorgeschlagen werden, die möglichst zuverlässig ist, insbesondere zuverlässiger als bisherige Verfahren ist. Zumindest soll zu bisher bekannten Verfahren eine alternative Lösung vorgeschlagen werden.

Erfindungsgemäß wird ein Verfahren nach Anspruch 1 vorgeschlagen. Demnach wird von einem aerodynamischen Rotor einer Windenergieanlage ausgegangen, der wenigstens ein Rotorblatt aufweist, insbesondere drei Rotorblätter aufweist. Die Windenergieanlage ist eine solche, bei der der Rotor mit einer variablen Drehzahl betreibbar ist. Die Windenergieanlage ist also vom Typ drehzahlvariabler Windenergieanlagen.

Dazu wird vorgeschlagen, dass eine Windgeschwindigkeit eines auf den Rotor wirkenden Windes erfasst wird. Dazu kann bspw. ein Gondelanemometer verwendet werden, oder bspw. ein Radar basiertes Messsystem oder ein Laser basiertes Messsystem wie ein sog. LIDAR.

Es wird dann eine Betriebsgröße erfasst, die von der Windgeschwindigkeit abhängt, die nämlich im Betrieb der Windenergieanlage aus der Windgeschwindigkeit resultiert. Das kann besonders im Teillastbetrieb, wenn der Wind noch schwach ist und keine Nennleistung erzeugt werden kann, die von der Windenergieanlage erzeugte Leistung sein. Die

Leistung, die die Windenergieanlage im Teillastbetrieb erzeugt, ist nämlich umso größer, umso größer die Windgeschwindigkeit ist und ist damit eine von der Windgeschwindigkeit abhängige Betriebsgröße .Im Vollastbetrieb, wenn die Windgeschwindigkeit ausreichend hoch ist, insbesondere wenn sie Nennwindgeschwindigkeit erreicht hat oder darüber liegt, hängt die erzeugte Leistung der Windenergieanlage im Grunde nicht mehr von der Windgeschwindigkeit ab, denn in diesem Fall wird die erzeugte Leistung üblicherweise auf Nennleistung oder einen anderen vorgegebenen Wert geregelt. Dies erfolgt durch Verstellen der Rotorblätter. Je stärker der Wind weht, je höher also die Windgeschwindigkeit ist, umso stärker werden die Rotorblätter aus dem Wind gedreht. Entsprechend hängt der Blattwinkel von der Windgeschwindigkeit ab und bildet eine von der Windgeschwindigkeit abhängende Betriebsgröße.

Es kommen aber auch andere Betriebsgrößen in Betracht, wie bspw. ein Drehmoment oder eine Drehzahl.

Diese erfasste Betriebsgröße wird dann mit einer Referenzgröße einer windgeschwindigkeitsabhängigen charakteristischen Betriebsgrößenkurve der Windenergieanlage verglichen. Die charakteristische Betriebsgrößenkurve ist eine als optimal angenommene Betriebsgröße in Abhängigkeit der Windgeschwindigkeit. Besonders bei der Auslegung der Windenergieanlage werden umfangreiche Voruntersuchungen durchgeführt und dabei kann auch, z.B. durch Simulationen, ein Verlauf der jeweiligen Betriebsgrößen, also bspw. der erzeugten Abgabeleistung oder des Rotorblattwinkels, in Abhängigkeit der Windgeschwindigkeit vorbestimmt werden. Da die Windenergieanlage zweckmäßigerweise möglichst optimal ausgelegt wird, kann dieser Verlauf der Betriebsgröße in Abhängigkeit der Windgeschwindigkeit, wie aufgrund der Auslegung erwartet wird, als optimaler Verlauf der Betriebsgröße angenommen werden. Ob dies tatsächlich einen optimalen Verlauf darstellt, ist bei diesem Verfahren dann - falls überhaupt - von geringerer Bedeutung. Tatsächlich ist es aber regelmäßig so, dass im Betrieb der Windenergieanlage sich tatsächlich die Betriebsgröße bei der entsprechenden Windgeschwindigkeit einstellt, die auch durch die charakteristische Betriebsgrößenkurve vorhergesagt bzw. festgelegt wurde. Das setzt allerdings voraus, dass die Windenergieanlage auch im Wesentlichen ohne Störungen und Beeinträchtigungen betrieben werden kann.

Es wird nun vorgeschlagen, dass auf einen Eisansatz an dem Rotorblatt erkannt wird, wenn die erfasste Betriebsgröße von der Referenzgröße wenigstens um eine vorbestimmte Mindestabweichung abweicht. Idealerweise weicht also die erfasste Betriebsgrö-ße von der Referenzgröße, also der für die Windgeschwindigkeit vorhergesagten Betriebsgröße, nicht ab. Tritt aber eine Störung oder Beeinträchtigung der Windenergieanlage ein, so kann es zu einer Abweichung kommen. Der Eisansatz ist dabei eine mögliche Störung und hinsichtlich einer Veränderung des aerodynamischen Profils des Rotorblattes ist der Eisansatz wohl als größte realistische Veränderung dieses Blattprofils, also der Aerodynamik des Rotorblatts anzunehmen. Deshalb führt ein solcher Eisansatz zu einer Abweichung der erfassten Betriebsgröße von der Referenzgröße und daher wird aus dieser Abweichung geschlossen, dass ein Eisansatz vorliegt. Dafür muss aber eine vorbestimmte Mindestabweichung erreicht werden. Wie groß eine solche vorgebestimmte Mindestabweichung sein sollte, kann in Simulationen vorher erkannt werden. Es kommt aber auch in Betracht, dass in Vergleichsanlagen, bzw. in vergleichbaren Testanlagen, Erfahrungen gesammelt werden. Häufig ist aber auch die Art eines Eisansatzes recht gut bekannt und es kann dann daraus rechnerisch ermittelt werden, wie groß die Abweichung wenigstens anzunehmen ist. Auch so kann somit die vorbestimmte Mindestabweichung erfasst werden.

Alternativ wird vorgeschlagen, statt die erfasste Betriebsgröße mit einer Referenzgröße, also einem Referenzwert der Betriebsgröße zu vergleichen, die jeweils erfasste Windgeschwindigkeit mit dem Wert der Windgeschwindigkeit zu vergleichen, die der erfassten Betriebsgröße durch die charakteristische windgeschwindigkeitsabhängige Betriebsgrö-ßenkurve zugeordnet ist. Diese Windgeschwindigkeit, die die der erfassten Betriebsgröße durch die charakteristische windgeschwindigkeitsabhängige Betriebsgrößenkurve zugeordnet ist, bildet dann die Referenzgröße. Statt der Betriebsgrößen werden also die zugeordneten Windgeschwindigkeiten verglichen. Auch hier wird dann eine vorbestimmte Mindestabweichung zu Grunde gelegt, die natürlich entsprechend gewählt wird. Die vorbestimmte Mindestabweichung ist also beim Vergleich der Betriebsgrößen eine andere als beim Vergleich der zugeordneten Windgeschwindigkeiten.

Nun wurde aber erkannt, dass eine solche Abweichung, sei es nun die beim Vergleich der Betriebsgrößen, oder die beim Vergleich der zugeordneten Windgeschwindigkeiten, aufgrund eines Eisansatzes von der Windgeschwindigkeit abhängen kann. Es wird somit vorgeschlagen, dass die Mindestabweichung, nämlich die vorbestimmte Mindestabweichung, in Abhängigkeit der Windgeschwindigkeit vorgegeben wird. Zunächst wurde also erkannt, dass es nicht ausreicht, eine einzige Mindestabweichung zu bestimmen und zugrunde zu legen, sondern dass Windgeschwindigkeiten auch bei der Festlegung der Mindestabweichung zu unterscheiden sind. Eine solche Unterscheidung wird dann bei der Bestimmung der Mindestabweichung vorgenommen und das Ergebnis wird als eine Mindestabweichung in Abhängigkeit der Windgeschwindigkeit vorgegeben.

Besonders kann das so erfolgen, dass die Mindestabweichung in Form einer Abweichungskurve in Abhängigkeit der Windgeschwindigkeit vorgegeben wird. Die Mindestabweichung ist also über die Windgeschwindigkeit nicht konstant. Damit kann besonders auch eine Fehleinschätzung des Eisansatzes vermieden werden, weil nämlich durch die zusätzliche Betrachtung der Windgeschwindigkeit nicht nur die Betriebsgröße erfasst wird, sondern auch das Abweichungskriterium dezidiert für die betreffende Windgeschwindigkeit festgelegt wird. Entsprechend wird für jeden Fall auch die passende Mindestabweichung verwendet.

Gemäß einer Ausführungsform wird somit vorgeschlagen, dass als Betriebsgröße eine von der Windenergieanlage aus dem Wind erzeugte Abgabeleistung erfasst wird. Außerdem oder alternativ kann ein zum Begrenzen der Abgabeleistung eingestellter Blattwinkel als Betriebsgröße erfasst werden. Beides kann auch kombiniert werden, indem im Teillastbetrieb die erzeugte Abgabeleistung verwendet wird und im Volllastbetrieb der eingestellte Blattwinkel.

Zum Vergleichen der erfassten Betriebsgröße mit der Referenzgröße, also zum Auswerten, wird somit gemäß einer Ausführungsform die erfasste Abgabeleistung mit einer Referenzleistung einer charakteristischen Betriebsleistungskurve der Windenergieanlage verglichen. Die charakteristische Betriebsleistungskurve gibt eine als maximal angenommene Abgabeleistung in Abhängigkeit der Windgeschwindigkeit an. Sie gibt also die Werte der Abgabeleistung an, die bei der betreffenden Windgeschwindigkeit maximal erreicht werden können. Damit wird dann die erfasste Abgabeleistung verglichen.

Gemäß einer Ausführungsform kann die Rotordrehzahl als Betriebsgröße verwendet werden. Besonders wird vorgeschlagen, für diese und jegliche weiteren Ausführungsformen, die die Betrachtung der Abgabeleistung als für die Eisansatzerkennung zu betrachtende Betriebsgröße betreffen, alternativ und sinngemäß die Rotordrehzahl statt der Abgabeleistung als Betriebsgröße zu verwenden. Im Übrigen kann generell statt der Abgabeleistung auch eine andere, ähnliche Leistung der Windenergieanlage betrachtet werden, insbesondere eine Generatorleistung.

Vorzugsweise wird somit vorgeschlagen, dass als Betriebsgröße eine von der Windenergieanlage eingestellte Rotordrehzahl erfasst wird und zum Vergleichen der erfassten Betriebsgröße bzw. der erfassten Windgeschwindigkeit mit der Referenzgröße die erfasste Rotordrehzahl mit einer Referenzdrehzahl einer charakteristischen Drehzahlkurve der Windenergieanlage verglichen wird bzw. die erfasste Windgeschwindigkeit mit einer der erfassten Rotordrehzahl über die charakteristische Drehzahlkurve zugeordneten Windgeschwindigkeit verglichen wird, wobei die charakteristische Drehzahlkurve eine als maximal angenommene Rotordrehzahl in Abhängigkeit der Windgeschwindigkeit angibt und auf einen Eisansatz an dem Rotorblatt erkannt wird, wenn die erfasste Rotordrehzahl von der Referenzdrehzahl wenigstens um eine vorbestimmte Mindestabweichungsdrehzahl abweicht bzw. die erfasste Windgeschwindigkeit von der der erfassten Rotordrehzahl zugeordneten Windgeschwindigkeit um eine vorbestimmte Mindestabweichungsgeschwindigkeit abweicht, wobei die Mindestabweichungsdrehzahl in Abhängigkeit der Windgeschwindigkeit vorgegeben wird.

Besonders wird für den Volllastbetrieb vorgeschlagen, den eingestellten Blattwinkel zu betrachten und entsprechend wird bei Verwendung des eingestellten Blattwinkels als Betriebsgröße zum Vergleich mit der Referenzgröße der erfasste Blattwinkel mit einem Referenzwinkel einer charakteristischen Blatteinstellkurve der Windenergieanlage verglichen. Die charakteristische Blattwinkelkurve gibt einen als optimal angenommenen Blattwinkel in Abhängigkeit der Windgeschwindigkeit an. Die charakteristische Blattwinkelkurve gibt also einen Verlauf des Blattwinkels in Abhängigkeit der Windgeschwindigkeit an. Damit kann jeder Windgeschwindigkeit, jedenfalls im Volllastbetrieb, ein Blattwinkel zugeordnet werden, der sich normalerweise im Betrieb der Windenergieanlage bei der betreffenden Windgeschwindigkeit einstellt.

Auf einen Eisansatz an dem Rotorblatt wird bei Betrachtung der Leistung dann erkannt, wenn die erfasste Abgabeleistung von der Referenzleistung wenigstens um eine vorbestimmte Mindestabweichungsleistung abweicht. Dann ist die erfasste Abgabeleistung so viel kleiner als die bei dieser Windgeschwindigkeit zu erwartende Abgabeleistung, dass von einem Eisansatz ausgegangen wird.

Für den erfassten Blattwinkel wird so vorgegangen, dass dieser darauf untersucht wird, ob er wenigstens um einen vorbestimmten Mindestabweichungswinkel vom dem Referenzwinkel abweicht. Liegt eine solch große Abweichung vor, wird von einem Eisansatz ausgegangen.

Auch hier kann alternativ jeweils die zugeordnete Windgeschwindigkeit betrachtet werden. Bei Verwendung der charakteristischen Betriebsleistungskurve wird somit die Abgabeleistung erfasst und über die charakteristische Betriebsleistungskurve die zugeordnete Windgeschwindigkeit bestimmt, mit der wiederum die erfasste Windgeschwindigkeit verglichen wird. Das Vergleichsmaß ist dann eine vorbestimmte Mindestabweichungsgeschwindigkeit und es wird von einem Eisansatz ausgegangen, wenn die dem Betrage nach erreicht oder überschritten wird.

Auch bei Verwendung der charakteristischen Blattwinkelkurve kann alternativ jeweils die zugeordnete Windgeschwindigkeit betrachtet werden. Es wird somit der Blattwinkel erfasst und über die charakteristische Blattwinkelkurve die zugeordnete Windgeschwindigkeit bestimmt, mit der wiederum die erfasste Windgeschwindigkeit verglichen wird. Das Vergleichsmaß ist dann wieder eine vorbestimmte Mindestabweichungsgeschwindigkeit und es wird von einem Eisansatz ausgegangen, wenn die dem Betrage nach erreicht oder überschritten wird.

Entsprechend wird hierbei jeweils die Mindestabweichungsleistung, der Mindestabweichungswinkel oder die Mindestabweichungsgeschwindigkeit in Abhängigkeit der Windgeschwindigkeit vorgegeben. Die Größe der Abweichung, um die die erfasste Abgabeleistung von der Referenzleistung abweicht, bevor auf einen Eisansatz erkannt wird, ist somit variabel und wird abhängig der Windgeschwindigkeit vorgegeben. Gleiches gilt für den Mindestabweichungswinkel, der ebenfalls abhängig der Windgeschwindigkeit vorgegeben wird und damit wird auch für die Abweichung zwischen erfasstem Winkel und für die jeweilige Windgeschwindigkeit zu erwartenden Winkel eine variable Toleranz vorgeschlagen. Diese Überlegungen betreffen sinngemäß auch die Alternativen, bei denen die Mindestabweichungsgeschwindigkeiten betrachtet und vorgegeben werden, denn sie bauen auf denselben beiden charakteristischen Kurven auf. Die Betrachtung der Windgeschwindigkeiten kann dabei vorteilhaft sein, weil die Mindestabweichungswindgeschwindigkeiten relativ zur erfassten Größe größer sein können, als die Mindestabweichungsleistung oder der Mindestabweichungswinkel.

Gemäß einer Ausführungsform wird vorgeschlagen, dass für Windgeschwindigkeiten unterhalb einer Nennwindgeschwindigkeit die von der Windenergieanlage aus dem Wind erzeugte Abgabeleistung als Betriebsgröße erfasst wird. Die erzeugte Abgabeleistung wird also damit im Teillastbetrieb als zu erfassende und damit zum Erkennen des Eisansatzes heranzuziehende Betriebsgröße verwendet werden.

Für Windgeschwindigkeiten oberhalb einer Nennwindgeschwindigkeit wird vorgeschlagen, dass der zum Begrenzen der Abgabeleistung eingestellte Blattwinkel als Betriebsgröße erfasst wird und als Kriterium zum Erkennen eines Eisansatzes zugrunde gelegt wird. Optional wird vorgeschlagen, dass die Windenergieanlage eine Betriebssteuerung aufweist, die vom Teillastbetrieb zum Volllastbetrieb einen Übergangsbereich vorsieht. Dieser Übergangsbereich kann durch eine erste und eine zweite Umschaltwindgeschwindigkeit gekennzeichnet sein. Die erste Umschaltwindgeschwindigkeit liegt unterhalb der Nennwindgeschwindigkeit, bspw. um einen Meter pro Sekunde oder zwei Meter pro Sekunde unterhalb der Nennwindgeschwindigkeit. Die zweite Umschaltwindgeschwindigkeit liegt vorzugsweise oberhalb der Nennwindgeschwindigkeit, bspw. um wenigstens einen Meter pro Sekunde (m/s) darüber oder um wenigstens zwei Meter pro Sekunde (m/s) darüber.

Befindet sich die Windenergieanlage nun in diesem Übergangsbereich, weil sich nämlich die Windgeschwindigkeit in diesem Übergangsbereich befindet, so wird eine kombinierte Steuerung vorgeschlagen, bei der die Rotorblätter bereits etwas aus dem Wind gedreht werden, die Abgabeleistung gleichwohl noch nicht Nennleistung erreicht hat und damit die Windenergieanlage trotz leicht verändertem Blattwinkel weiterhin basierend auf einer Drehzahlleistungskurve gesteuert wird.

Eine Steuerung basierend auf einer Drehzahlleistungskennlinie ist auch für den übrigen Teillastbetrieb vorgesehen. Alternativ könnte auch eine Drehzahldrehmomentkennlinie verwendet werden. Bei der Steuerung basierend auf einer Drehzahlleistungskennlinie wird eine Drehzahlleistungskennlinie vorgegeben, die einen einzustellenden Zusammenhang zwischen Drehzahl und Leistung vorgibt. Im Betrieb wird dann jeweils die sich einstellende Drehzahl erfasst und die dazu zugehörige Abgabeleistung gemäß der Drehzahlleistungskennlinie eingestellt. Das Einstellen der Abgabeleistung führt auch zu einem elektromagnetischen Drehmoment des Generators, das dem mechanischen Drehmoment, das durch die Kraft des Windes auf die Rotorblätter hervorgerufen wird, entgegensteht. Sind diese beiden Drehmomente gleich, dreht sich die Windenergieanlage, also ihr Rotor, mit einer konstanten Drehzahl. Ist aber bspw. das mechanische Drehmoment größer, so führt dies zu einer Beschleunigung des Rotors, so dass sich die Drehzahl des Rotors erhöht und dann aufgrund der Drehzahlleistungskennlinie eine neue Leistung eingestellt wird. Das erfolgt so lange, bis sich ein stabiler Arbeitspunkt einstellt.

Eine solche Steuerung der Windenergieanlage basierend auf der Drehzahlleistungskennlinie kann auch im Übergangsbereich beibehalten werden, wobei aber die Rotorblätter bereits in ihrem Blattwinkel verstellt werden, nämlich besonders aus dem Wind gedreht werden, zumindest um kleine Werte wie bspw. Werte im Bereich von 1° bis 5°, oder im Bereich von 1° bis 10°.

Entsprechend wird vorgeschlagen, für einen solchen Übergangsbereich, also für Windgeschwindigkeiten zwischen der ersten Umschaltwindgeschwindigkeit und der zweiten Umschaltwindgeschwindigkeit, die erzeugte Abgabeleistung und den eingestellten Blattwinkel jeweils als eine Betriebsgröße zu erfassen. Ein Eisansatz wird dann angenommen, wenn die erfasste Abgabeleistung für eine Referenzleistung wenigstens um eine vorbestimmte Mindestabweichungsleistung abweicht, oder der erfasste Blattwinkel von dem Referenzwinkel wenigstens um einen vorbestimmten Mindestabweichungswinkel abweicht. Insoweit kann eines dieser beiden Kriterien reichen, um von einem Eisansatz auszugehen.

Es kommt aber auch in Betracht, dass beide Kriterien überwacht werden. Vorzugsweise ist dabei vorgesehen, dass dann von einem Eisansatz ausgegangen wird, wenn eines dieser Kriterien erfüllt ist. Vorzugsweise wird diese spezielle Situation im Übergangsbereich bei der Wahl der vorbestimmten Mindestabweichung berücksichtigt. Bspw. kann sowohl die vorbestimmte Mindestabweichungsleistung als auch der vorbestimmte Mindestabweichungswinkel einen kleineren Wert aufweisen, als für den Fall, wenn nur eine dieser beiden erfassten Größen als Betriebsgröße überwacht würde.

Hier liegt besonders die Erkenntnis zugrunde, dass sich im Falle eines Eisansatzes bei Windgeschwindigkeiten im Übergangsbereich ein Arbeitspunkt einstellen wird, der sowohl hinsichtlich der erzeugte Abgabeleistung als auch hinsichtlich des eingestellten Blattwinkels nicht dem im Voraus berechneten Arbeitspunkt im unbeeinflussten Fall, also im Fall ohne Eisansatz, entspricht. Der Eisansatz lässt sich dann also sowohl an der tatsächlich erfassten Abgabeleistung als auch an dem tatsächlich erfassten eingestellten Blattwinkel ablesen.

Für all diese Varianten kommt auch in Betracht, dass auf einen Eisansatz erkannt wird, wenn die erfasste Windgeschwindigkeit von einer der erfassten Abgabeleistung oder von einer dem erfassten Blattwinkel zugeordneten Windgeschwindigkeit um eine vorbestimmte Mindestabweichungsgeschwindigkeit abweicht. Die Abweichung der Betriebsgrößen, nämlich der Abgabeleistung oder des Blattwinkels, wird dann indirekt herangezogen, nämlich über die Betrachtung der Abweichung zwischen der erfassten Windgeschwindigkeit und der der erfassten Betriebsgröße (Abgabeleistung oder Blattwinkel) zugeordneten Windgeschwindigkeit. Bei einer kombinierten Betrachtung beider Betriebsgrößen können auch die Windgeschwindigkeiten verglichen werden. Es ergibt sich dann für jede der beiden Betriebsgrößen jeweils eine Abweichung der Windgeschwindigkeiten und diese beiden Abweichungen können entsprechend kombiniert betrachtet werden, insbesondere gewichtet aufaddiert und mit einer daran angepassten vorbestimmten Mindestabweichung verglichen werden, um auf Eisansatz oder nicht zu erkennen.

Gemäß einer Ausführungsform wird vorgeschlagen, dass die charakteristische Blattwinkelkurve abhängig einer temporär vorgegebenen reduzierten Betriebsgrenze, insbesondere einer reduzierten Leistungsgrenze und/oder einer reduzierten Drehzahlgrenze vorgegeben wird. Dadurch wird eine Lösung geschaffen, bei der die Windenergieanlage in einem reduzierten Betrieb arbeitet, insbesondere in einem gedrosselten Betrieb, in dem die Windenergieanlage besonders aufgrund äußerer Vorschriften, temporär insbesondere nicht mehr Leistung als eine Drosselleistung abgeben darf, die geringer ist als eine Nennleistung der Windenergieanlage, und insbesondere weniger Leistung abgeben muss, als aus dem Wind verfügbar wäre, und/oder dass sie mit einer gegenüber einer Nenndrehzahl reduzierten Drehzahl betrieben werden muss. Bspw. können Vorschriften eines Netzbetreibers des elektrischen Versorgungsnetzes, in das die Windenergieanlage einspeist, zu einer Leistungsreduzierung führen. Schallschutzvorschriften können der Grund für eine Drehzahl- und/oder Leistungsreduzierung sein. Für diesen Betrieb mit reduzierter Betriebsgrenze wird vorgeschlagen, eine eigene charakteristische Blattwinkelkurve vorzugeben.

Optional wird dazu vorgeschlagen, dass der vorbestimmte Mindestabweichungswinkel ebenfalls in Abhängig der temporär vorgegeben reduzierten Leistungsgrenze vorgegeben wird. Zu diesem Betrieb mit temporär reduzierter Leistung kann somit ein Eisansatz gezielt durch entsprechende Anpassung der Überwachungskriterien erkannt werden.

Gemäß einer weiteren Ausgestaltung wird vorgeschlagen, dass die Mindestabweichung über eine windgeschwindigkeitsabhängige Abweichungskurve vorgegeben wird. Die Abweichungskurve gibt dabei einen Verlauf der Betriebsgröße in Abhängigkeit der Windgeschwindigkeit an und die Abweichungskurve weicht jeweils um die Mindestabweichung von der Betriebsgrößenkurve ab. Wenn sich die Mindestabweichung auf eine Abweichung zwischen einer Betriebsgröße und einer Referenzbetriebsgröße bezieht, kann sie auch als Mindestbetriebsabweichung bezeichnet werden und für den Fall ist die Abweichungskurve um die Mindestbetriebsabweichung kleiner als die Betriebsgrößenkurve.

Wenn sich die Mindestabweichung auf eine Abweichung zwischen einer der erfassten Windgeschwindigkeit und einer der erfassten Betriebsgröße zugeordneten Windgeschwindigkeit bezieht, kann sie auch als Mindestgeschwindigkeitsabweichung bezeichnet werden und für den Fall ist die Abweichungskurve um die Mindestgeschwindigkeitsabweichung größer als die Betriebsgrößenkurve.

Bei konstanter Mindestabweichung ergäbe sich somit eine Verschiebung der Abweichungskurve relativ zur Betriebsgrößenkurve. Da aber die Mindestabweichung von der Windgeschwindigkeit abhängt und dabei abhängig der Windgeschwindigkeit nicht konstant ist, ergibt sich vielmehr ein variierender Abstand zwischen der Betriebsgrößenkurve und Abweichungskurve.

Gemäß einer Ausführungsform wird vorgeschlagen, dass die Abweichungskurve vorzugsweise nicht um einen konstanten Windgeschwindigkeitswert zur Betriebsgrößenkurve verschoben ist, und/oder dass die Abweichungskurve um unterschiedlich große Windgeschwindigkeitswerte von der Betriebsgrößenkurve abweicht. Besonders wurde erkannt, dass ein konstantes Verschieben der Abweichungskurve relativ zur Betriebsgrößenkurve die erkannten windgeschwindigkeitsabhängigen Zusammenhänge zwischen der Betriebsgrößenabweichung und dem Eisansatz durch eine solche konstante Verschiebung schlecht oder sogar falsch berücksichtigt werden würden. Somit wird vorgeschlagen, eine solche Verschiebung nicht vorzunehmen und stattdessen vielmehr auch hinsichtlich der Windgeschwindigkeit unterschiedlich große Abstände zwischen Abweichungskurve und Betriebsgrößenkurve zu verwenden.

Gemäß einer weiteren Ausführungsform wird vorgeschlagen, dass die vorbestimmte Mindestabweichungsleistung bzw. die Mindestabweichungsgeschwindigkeit, je nach dem, was betrachtet wird, mit zunehmender Windgeschwindigkeit zunimmt. Dies betrifft den Teillastbetrieb und dort wird vorgeschlagen, dass mit zunehmender Windgeschwindigkeit die vorbestimmte Mindestabweichungsleistung immer größer wird. Insbesondere wird vorgesehen, dass die vorbestimmte Mindestabweichungsleistung ab einer ersten Anfangswindgeschwindigkeit oder einer Windgeschwindigkeitsrelevanzschwelle und/oder kontinuierlich zunimmt.

Optional wird vorgeschlagen, dass die Abweichung der erfassten Windgeschwindigkeit zu der der erfassten Abgabeleistung zugeordneten Windgeschwindigkeit erfasst wird und dazu die vorbestimmte Mindestabweichungsgeschwindigkeit statt der Mindestabweichungsleistung betrachtet wird und sich sinngemäß wie die Mindestabweichungsleistung verhält.

Es wurde besonders erkannt, dass bei geringen Windgeschwindigkeiten bereits eine geringe Abweichung der erfassten Abgabeleistung von der vorbestimmten Abgabeleistung bereits einen Eisansatz anzeigen kann. Besonders wurde erkannt, dass bei geringen Windgeschwindigkeiten ein Eisansatz nur zu geringen Leistungseinbußen führt. Gleichzeitig wurde erkannt, dass bei geringen Windgeschwindigkeiten die Vorgabe einer geringen vorbestimmten Mindestabweichungsleistung auch vergleichsweise zuverlässig möglich ist, weil erkannt wurde, dass eine hierfür sinnvolle Windgeschwindigkeitsmessung mit hoher Genauigkeit ebenfalls gut möglich ist, weil mit weniger Turbulenzen bei geringen Windgeschwindigkeiten zu rechnen ist, was die Messgenauigkeit erhöht. Vorzugsweise wird bei sehr geringen Windgeschwindigkeit, insbesondere unterhalb von 4m/s oder 5m/s, eine erhöhte Mindestabweichung vorgeschlagen.

Bei höheren Windgeschwindigkeiten wird daher vorgeschlagen, eine höhere Mindestabweichungsleistung vorzugeben. Eine solche hohe Mindestabweichungsleistung wird auch bei hohen Windgeschwindigkeiten, besonders in der Nähe der Nennwindgeschwindigkeit erreicht und gleichzeitig kann diese größere Abweichung Ungenauigkeiten durch ungenauere Messung der Windgeschwindigkeit ausgleichen.

Außerdem wird vorgeschlagen, dass der vorbestimmte Mindestabweichungswinkel mit zunehmender Windgeschwindigkeit zunächst abnimmt, insbesondere dann, wenn die Windenergieanlage in einem nicht reduzierten Betrieb arbeitet. Ähnliches kann auch gelten, wenn die Windenergieanlage in ihrem Betrieb nur in geringem Maße reduziert wird. OK, kann bleiben. Hier wurde besonders erkannt, dass im nicht reduzierten Fall das Ausregeln der Leistung erst bei vergleichsweise hohen Windgeschwindigkeiten stattfindet, nämlich bei Nennwindgeschwindigkeit, was im Bereich von 12 Metern pro Sekunde liegen kann. Gleichzeitig liegt hier im nicht reduzierten, also ungedrosselten Betrieb eine entsprechend hohe Leistung vor, nämlich Nennleistung.

Dieser Betriebspunkt am Anfang des Volllastbetriebs stellt insoweit einen optimalen Betriebspunkt dar. Hier wird nämlich, unter Berücksichtigung der Auslegungsgrenzen der Windenergieanlage, maximale Leistung aus dem Wind entnommen. Der Eisansatz führt somit zu einem sehr starken Einfluss, so dass sich eine große Abweichung des Blattwinkels bei Eisansatz einerseits und ohne Eisansatz andererseits ergibt. Mit zunehmender Windgeschwindigkeit werden die Blätter weiter aus dem Wind gedreht, um die Leistungsentnahme aus dem Wind nicht über Nennleistung ansteigen zu lassen. Die Rotorblätter arbeiten hier mit stärker werdendem Wind zunehmend aerodynamisch ineffizient und genau das ist schließlich auch der Grund für das Verstellen der Rotorblätter bei zunehmender Windgeschwindigkeit, dass sie nämlich ineffizienter arbeiten, um weniger Leistung aus dem Wind zu entnehmen, als möglich wäre. Es wurde erkannt, dass hierbei eine zusätzliche aerodynamische Verschlechterung durch Eisansatz mit zunehmender Windgeschwindigkeit weniger ins Gewicht fällt. Es wird damit vorgeschlagen, den vorbestimmten Mindestabweichungswinkel dann kleiner zu wählen.

Gleichzeitig wurde aber auch erkannt, dass sich im Betrieb mit reduzierter Leistung, sofern jedenfalls eine signifikante Reduzierung vorliegt, ein anderer Zusammenhang einstellt. Hierbei erfolgt nämlich ein Verstellen der Rotorblätter aus dem Wind bereits bei niedrigeren Windgeschwindigkeiten, z.B. bei Windgeschwindigkeiten im Bereich von 8 Meter pro Sekunde (m/s). Hierbei liegen auch geringere Drehzahlen vor. Der beschriebene leistungsoptimale Punkt wird nicht erreicht und Verschlechterungen der aerodynamischen Effizienz durch Eisablagerung machen sich daher anfangs weniger bemerkbar.

Mit zunehmender Windgeschwindigkeit kann dabei der Einfluss eines Eisansatzes sogar noch steigen. Dabei wurde erkannt, dass bei einem Vergleich zum ungedrosselten Volllastbetrieb bei gleicher Windgeschwindigkeit andere Blattwinkel vorliegen. Das wiederum führt auch zu einem unterschiedlichen Angreifen des Windes am Rotorblatt. Das kann auch bedeuten, dass der Wind an unterschiedlichen Bereichen des Rotorblattes bezogen auf den Rotorradius wirksam wird. Das kann dazu führen, dass sich der Eisansatz auf den Blattwinkel stärker bemerkbar macht. Weiter wurde erkannt, dass sich im reduzierten Fall bei noch höheren Windgeschwindigkeiten der Einfluss des Eisansatzes auf den Blattwinkel wieder verringert, und dann Effekte wie oben zum Volllastbetrieb beschrieben auftreten können.

Somit wird vorgeschlagen, dass der vorbestimmte Mindestabweichungswinkel mit zunehmender Windgeschwindigkeit zu nimmt, wenn die Windenergieanlage in einem reduzierten Betrieb arbeitet, in dem die Abgabeleistung auf einen Leistungswert von 50 % oder weniger insbesondere unter 40% einer Anlagennennleistung der Windenergieanlage reduziert ist. Den vorbestimmten Mindestabweichungswinkel mit zunehmender Windgeschwindigkeit zunehmen zu lassen, wird somit für einen Betrieb vorgeschlagen, der signifikant in seiner Leistungsabgabe reduziert ist bzw. begrenzt ist.

Optional wird vorgeschlagen, dass die Abweichung der erfassten Windgeschwindigkeit zu der dem erfassten Blattwinkel zugeordneten Windgeschwindigkeit erfasst wird und dazu die vorbestimmte Mindestabweichungsgeschwindigkeit statt dem Mindestabweichungswinkel betrachtet wird und sich sinngemäß wie der Mindestabweichungswinkel verhält.

Vorzugsweise wird die Windenergieanlage mittels einer Drehzahlleistungskennlinie betrieben, bei der die Abgabeleistung der Windenergieanlage in Abhängigkeit einer erfassten Drehzahl des Rotors eingestellt wird. Besonders liegt ein solcher Betrieb der vorgeschlagenen Eisansatzerkennung zugrunde. Bei einem solchen Betrieb mittels einer Drehzahlleistungskennlinie wird gemäß einer solchen Kennlinie die Leistung abhängig der jeweils vorliegenden Drehzahl eingestellt. Eine solche Drehzahlleistungskennlinie hat üblicherweise einen streng monoton steigenden Verlauf und insoweit wird die Leistung anhand dieses Verlaufs der Drehzahl nachgestellt, bis sich ein stabiler Arbeitspunkt einstellt. Dieser Arbeitspunkt gibt Aufschluss über die Windgeschwindigkeit, wenn die Windenergieanlage arbeitet und es würde sich ein anderer Arbeitspunkt einstellen, wenn die Aerodynamik der Rotorblätter durch Eisansatz gestört ist. Auf diese Erkenntnis baut die vorgeschlagene Eisansatzerkennung auf und daher wird vorgeschlagen, die Windenergieanlage mittels einer Drehzahlleistungskennlinie zu betreiben. Es ist zu beachten, dass dies besonders den Teillastbetrieb betrifft, denn sobald Nenndrehzahl erreicht ist, kann eine solche Kennlinie nicht mehr verwendet werden.

Alternativ kann statt einer Drehzahlleistungskennlinie auch eine Drehzahldrehmomentkennlinie verwendet werden. Das Prinzip ist ganz ähnlich, demnach nämlich eine Drehzahldrehmomentkennlinie vorgegeben wird und das Drehmoment abhängig der sich jeweils einstellenden Drehzahl eingestellt wird. Der Arbeitspunkt wird dann entlang der Drehzahldrehmomentkennlinie nachgeführt, bis sich ein stabiler Arbeitspunkt ergibt. Im Ergebnis beeinflusst auch das Drehmoment die Abgabeleistung und insoweit arbeitet ein Betrieb, der eine Drehzahlleistungskennlinie verwendet, äquivalent zu einem Betrieb, der eine Drehzahldrehmomentkennlinie verwendet.

Gemäß einer Ausgestaltung wird vorgeschlagen, dass auf einen Eisansatz an dem Rotorblatt nur dann erkannt wird, wenn eine erfasste Außentemperatur unterhalb einer vorbestimmten Maximaltemperatur liegt. Dazu wird vorzugsweise vorgeschlagen, dass die vorbestimmte Maximaltemperatur von der Windgeschwindigkeit abhängig vorgegeben wird. Besonders wurde erkannt, dass es sinnvoll ist, die Temperatur zusätzlich zu überwachen. Bei Temperaturen deutlich über dem Gefrierpunkt ist nicht mit einem Eisansatz zu rechnen. Zusätzlich wurde aber erkannt, dass diese vorbestimmte Maximaltemperatur nicht exakt bei dem Gefrierpunkt liegt, sondern häufig etwa 1 bis 2 Kelvin darüber liegt. Das hängt damit zusammen, dass der Eisansatz auch davon abhängt, wie die feuchte Luft das Rotorblatt jeweils umströmt. Dabei wurde auch erkannt, dass diese vorbestimmte Maximaltemperatur, unterhalb derer überhaupt erst auf einen Eisansatz geprüft werden sollte, von der Windgeschwindigkeit abhängt. Daher wird vorgeschlagen, diese vorbestimmte Maximaltemperatur abhängig der Windgeschwindigkeit vorzugeben. Insbesondere wird vorgeschlagen, dass die vorbestimmte Maximaltemperatur bei geringeren Windgeschwindigkeiten geringer ist als bei höheren Windgeschwindigkeiten. Vorzugsweise wird bei Windgeschwindigkeiten unterhalb der Nennwindgeschwindigkeit der Gefrierpunkt als vorbestimmte Maximaltemperatur vorgegeben und bei Windgeschwindigkeiten ab Nennwindgeschwindigkeit ein um zwei Kelvin höherer Wert vorgegeben.

Vorzugsweise wird außerdem überprüft, ob die erfasste Außentemperatur oberhalb einer vorbestimmten Mindesttemperatur liegt, die kleiner als die vorbestimmte Maximaltemperatur ist. Hier wurde erkannt, dass bei sehr niedrigen Temperaturen, die insbesondere um 10 Kelvin oder mehr unterhalb des Gefrierpunkts liegen, ein Eisansatz ebenfalls nicht mehr zu erwarten ist, da bei solchen tiefen Temperaturen die Luft üblicherweise so trocken ist, dass sich kein Eisansatz einstellt. Daher wird vorgeschlagen, dies als weiteres Prüfkriterium zu verwenden. Vorzugsweise wird die vorbestimmte Mindesttemperatur abhängig der vorherrschenden Windgeschwindigkeit gewählt.

Vorzugsweise wird die charakteristische Betriebsgrößenkurve im Betrieb der Windenergieanlage adaptiert. Dem liegt der Gedanke zugrunde, dass das Verhalten einer Windenergieanlage nie exakt vorhergesagt werden kann. Bspw. können Fertigungstoleranzen vorliegen und Variationen besonders auch von dem Aufstellungsort abhängen. Ebenfalls kann es vorkommen, z.B. durch leichte Verschmutzung und/oder Erosion der Rotorblätter, dass sich das Verhalten einer Windenergieanlage auch mit der Zeit ändern kann. Dann kann das Problem entstehen, dass die Kriterien zum Erkennen des Eisansatzes ungenau werden bzw. sich verschieben. Besonders das Vorgeben der Abweichungskurve ist dann problematisch, weil die Abweichungskurve dann möglicherweise nicht mehr zur tatsächlichen Situation bzw. zum tatsächlichen Zustand der Windenergieanlage an ihrem Aufstellungsort passt.

Es wurde aber erkannt, dass diese Abweichungskurve bzw. die Mindestabweichung im laufenden Betrieb nur schwierig adaptiert werden kann. Besonders kann im laufenden Betrieb nur schwierig überprüft werden, bei welchen Abweichungen ein Eisansatz tatsächlich aufgetreten ist. Das liegt besonders daran, dass eine Eisansatzsituation möglicherweise nicht häufig auftritt. Es wurde aber erkannt, dass stattdessen die charakteristische Betriebsgrößenkurve im Betrieb der Windenergieanlage erfasst und adaptiert werden kann. Besonders bei Temperaturen deutlich über dem Gefrierpunkt kann davon ausgegangen werden, dass kein Eisansatz vorliegt und somit Abweichungen der Betriebsgrößenkurve den Normalbetrieb wiederspiegeln müssen. Eine kontinuierliche Beobachtung der Betriebsgröße und Vergleich mit der ebenfalls kontinuierlich überwachten Windgeschwindigkeit ermöglicht somit auf einfache Art und Weise die charakteristische Betriebsgrößenkurve im Betrieb der Windenergieanlage zu adaptieren. Wird nun darauf aufbauend die Mindestabweichung angewendet, also auf die neue adaptierte Betriebsgrößenkurve, ergibt sich dadurch auch eine verbesserte Grundlage zum Erkennen eines Eisansatzes. Auch die Abweichungskurve kann dann basierend auf der adaptierten Betriebsgrößenkurve angepasst werden, was vorzugsweise vorgeschlagen wird.

Außerdem oder alternativ wird vorgeschlagen, dass zur charakteristischen Betriebsgrößenkurve im Betrieb der Windenergieanlage Betriebsabweichungen erfasst werden, die Abweichungen einer erfassten Betriebsgröße gegenüber einer Betriebsgröße gemäß der charakteristischen Betriebsgrößenkurve bezeichnen. Es wird mit anderen Worten eine normale Streuung der Betriebsgröße um die charakteristische und damit ideale Kurve aufgenommen. Dabei ist darauf zu achten, dass nur solche Streuungen, also erfassten Abweichungen aufgenommen werden, die nicht auf einen Eisansatz zurückzuführen sind. Dies kann besonders dadurch sichergestellt werden, dass solche Abweichungen nur bei entsprechend hohen Temperaturen aufgenommen werden, wenn ein Eisansatz ausgeschlossen werden kann.

Dazu wird dann vorgeschlagen, dass die Mindestabweichung jeweils so gewählt wird, dass sie größer als die entsprechende Betriebsabweichung ist. Die Mindestabweichung wird in Abhängigkeit der Windgeschwindigkeit vorgegeben und somit wird auch hier vorgeschlagen, dass die Mindestabweichung jeweils zu unterschiedlichen Windgeschwindigkeiten so gewählt wird, dass sie zu der betreffenden Windgeschwindigkeit größer als die entsprechende Betriebsabweichung der betreffenden Windgeschwindigkeit ist. Vorzugsweise kann eine solche Vorgabe der Mindestabweichung bzw. Änderung der Mindestabweichung abhängig der Windgeschwindigkeit in Windgeschwindigkeitsschritten erfolgen, z.B. alle 1 Meter pro Sekunde (m/s). Wird die Mindestabweichung also für jede Windgeschwindigkeit größer als die erfassten Abweichungen gewählt, insbesondere nur etwas größer, so kann dadurch ein sehr gutes und gleichzeitig angepasstes Kriterium zum Erkennen des Eisansatzes vorgegeben werden, dass zudem unterschiedliche Windgeschwindigkeiten auch hinsichtlich der Größe der Abweichung berücksichtigt.

Insbesondere ist dabei die Abweichungskurve so gewählt bzw. verändert, dass die Betriebsgrößenkurve mit den Betriebsabweichungen die Abweichungskurve nicht unterschreitet, bzw. je nach Vorzeichen überschreitet. Die Betriebsgrößenkurve kann somit als Kurve angesehen werden, um die die erfassten Abweichungen als Streuwerte liegen. Die Abweichungskurve wird dann im Idealfall entlang der äußeren Werte der Streuung gelegt, um es anschaulich auszudrücken. So kann dennoch im Ergebnis auch die Abweichungskurve adaptiert werden, ohne dass auf viele Eisansätze zum Adaptieren gewartet zu werden bräuchte.

Vorzugsweise wird vorgeschlagen, dass die Betriebsabweichungen als Standardabweichungen erfasst werden und außerdem oder alternativ, dass die Betriebsabweichungen als Abweichungsband zusammengefasst werden und die Abweichungskurve so gewählt und/oder verändert wird, dass sie bezogen auf die Werte der Betriebsgröße unterhalb des Abweichungsbandes liegt und/oder dass die jeweilige Mindestabweichung bzw. die Abweichungskurve im Betrieb der Windenergieanlage adaptiert wird, insbesondere in Abhängigkeit der adaptierten charakteristischen Betriebsleistungskurve und/oder in Abhängigkeit der erfassten Betriebsabweichungen adaptiert wird. Die erfassten Abweichungen werden somit, wie schon oben beschrieben, aufgenommen und können zur Bewertung oder Neudefinition des Bewertungskriteriums zum Erkennen des Eisansatzes herangezogen werden. Besonders bei Betrachtung der Abgabeleistung als Betriebsgröße liegt die Abweichungskurve, entsprechend nämlich die Abweichungsleistungskurve, unterhalb der Betriebskurve. Gleiches gilt, wenn als Betriebsgröße jeweils ein zum Begrenzen der Abgabeleistung eingestellter Blattwinkel verwendet wird und der Blattwinkel im Grunde so definiert wird, dass eine normale Betriebsstellung des Rotorblattes im Teillastbetrieb etwa im Bereich von 0 Grad oder wenigen Grad liegt und ein Blattwinkel in Fahnenstellung etwa einen Wert von 90 Grad entspricht.

Gemäß einer Ausführungsform wird vorgeschlagen, dass die jeweilige Mindestabweichung bzw. die Abweichungskurve von einer Umgebungstemperatur der Windenergieanlage abhängig vorgegeben wird. Hierzu wurde erkannt, dass die Außentemperatur besonders darauf Einfluss haben kann, wie schnell Eis am Rotorblatt ansetzt. Das wiederum kann auch Einfluss darauf haben, wie sich das Eis am Rotorblatt ansetzt, also wie ein solcher Eisansatz wächst, was Einfluss auf den Arbeitspunkt haben kann.

Gemäß einer Ausführungsform wird vorgeschlagen, dass die jeweilige Mindestabweichung bzw. die Abweichungskurve zusätzlich zur Windgeschwindigkeit von wenigstens einer weiteren Eigenschaft des auf den Rotor wirkenden Windes abhängt. Zu diesen Eigenschaften gehört eine Turbulenzintensität des Windes, eine vertikale Scherung des Windes, eine horizontale Scherung des Windes, eine Windrichtung und eine Windrichtungsänderung über die Höhe. Wenigstens eine dieser Windeigenschaften wird somit zusätzlich berücksichtigt, um die Mindestabweichung bzw. die Abweichungskurve vorzugeben.

Dabei wurde erkannt, dass die vorbestimmte Mindestabweichung, ab der auf einen Eisansatz geschlossen werden kann, nicht nur von der Windgeschwindigkeit abhängen muss. Dabei wurde besonders erkannt, dass der Einfluss der Windgeschwindigkeit auch von weiteren Kriterien des Windes abhängen kann. So kann bspw. ein Eisansatz auf eine laminare Strömung einen anderen Einfluss haben als auf eine turbulente Strömung, selbst bei gleicher Windgeschwindigkeit. Ähnliches gilt bei einer Scherung des Windes, sei sie vertikal oder horizontal. Hierbei wirkt der Wind unterschiedlich stark in unterschiedlichen Positionen auf den Rotor bzw. das betreffende Rotorblatt und dadurch wirkt sich auch der Einfluss eines Eisansatzes unterschiedlich aus. Gleiches gilt für eine Windrichtung und auch eine Windrichtungsänderung. Besonders eine Windrichtung kann auch standortabhängig einen Einfluss haben, besonders dann, wenn bekannt ist, dass aus unterschiedlichen Windrichtungen unterschiedlich feuchte Luft üblicherweise zu erwarten ist.

Die genannten Eigenschaften des Windes können auch als Windfeldparameter bezeichnet werden und insoweit wird vorgeschlagen, dass die jeweilige Mindestabweichung bzw. die Abweichungskurve von wenigstens einem Windfeldparameter abhängig vorgegeben wird. Besonders wird vorgeschlagen, dass diese Eigenschaften des auf den Rotor wirkenden Windes Windparameter bilden und der Wind in Abhängigkeit wenigstens eines Teils dieser Windfeldparameter klassifiziert wird und abhängig dieser Klassifizierung die Mindestabweichung vorbestimmt wird. Hier wurde besonders erkannt, dass eine dezidierte Betrachtung der einzelnen Eigenschaften des auf den Rotor wirkenden Windes nicht erforderlich ist und vielmehr eine generelle Klassifizierung ausreichen kann. Eine Klassifizierung kann bspw. so vorgenommen werden, dass der Wind aufgrund der Windfeldparameter als besonders gleichmäßig, weniger gleichmäßig, etwas ungleichmäßig und sehr ungleichmäßig klassifiziert wird. Abhängig dieser Gleichmäßigkeit, was nur eine Möglichkeit der Klassifizierung des Windfeldes ist, wird dann die Mindestabweichung vorbestimmt.

Besonders können dazu solche Parameter in Windenergieanlagen ermittelt werden, z.B. mit gondelbasierten LIDAR-Messsystemen.

Um einen Zusammenhang zwischen dieser Windfeldklassifizierung bzw. der Klassifizierung anhand der Windfeldparameter und der Betriebsgrößenabweichung herzustellen, könnte, sobald eine Eiserkennung am Rotorblatt auftritt, anhand der dabei gemessenen Windfeldparameter mit der entsprechenden Situation bei derselben Windfeldklassifizierung im eisfreien Zustand verglichen werden. Dazu wurden also entsprechende Daten der Windenergieanlage zu unterschiedlichen Windfeldklassen, also unterschiedlichen Klassifizierungen der Windfeldparameter, aufgenommen und zusammen mit der entsprechenden Windfeldklassifizierung abgespeichert. Besonders wurden so entsprechende Betriebsgrößen aufgenommen und abgespeichert. Diese Daten, die insoweit auch als historische Daten bezeichnet werden können, können dann im Falle eines erkannten Eisansatzes verglichen werden und dadurch kann besonders der Unterschied zwischen eisfreiem Betrieb und Betrieb mit Eisansatz für die jeweilige Windfeldklasse gegenüber gestellt werden. Die Abweichungen können somit auch jeweils als Kriterium für einen Eisansatz aufgenommen werden. Wird dann die Mindestabweichung überschritten, die auf diese Art und Weise festgelegt wurde, ist auf Eisansatz zu schließen. Durch die Klassifizierung ist der Einfluss der Windfeldparameter bzw. die dezidierte Betrachtung des Einflusses der Windfeldparameter auf ein geringes Maß reduzierbar, besonders auf ein Mindestmaß reduzierbar.

Gemäß einer Ausführungsform wird vorgeschlagen, dass die jeweilige Mindestabweichung bzw. die Abweichungskurve von einem Blattprofil des Rotorblattes abhängt, bzw. von den Blattprofilen der Rotorblätter des Rotors, die allerdings bei einem Rotor bzw. einer Windenergieanlage alle identisch sein sollten. Hier wurde besonders erkannt, dass das Design des Rotorblattes, das sich besonders in dem Blattprofil wiederspiegelt, Einfluss darauf hat, wie stark die Auswirkungen eines Eisansatzes auf den Betrieb der Windenergieanlage ist. Damit hat es Einfluss darauf, welche Mindestabweichung durch einen Eisansatz zu erwarten ist.

Ein Rotorblatt einer Windenergieanlage variiert in seinem Blattprofil von der Blattwurzel zur Blattspitze, aber meist kann dennoch ein für das Blatt charakteristisches, z.B. mittleres Blattprofil angenommen werden. Vorzugsweise wird vorgeschlagen, dass sich die genannte Abhängigkeit der Mindestabweichung bzw. der Abweichungskurve auf das Blattprofil gemäß eines Profilschnittes an einer Position von 50 bis 95 % des Rotorradius, also von der Drehachse bis zur Blattspitze, bezieht. Vorzugsweise bezieht sie sich auf das Blattprofil bei 80% bis 95% insbesondere bei 90 % des Rotorradius.

Besonders wird hier vorgeschlagen, dass Voruntersuchungen, die auch als Simulationen durchgeführt werden, angestellt werden. Hier wird besonders vorgeschlagen, dass in Simulationen Mindestabweichungen oder Abweichungskurven für unterschiedliche Rotorblätter und damit unterschiedliche Blattprofile aufgenommen werden.

Gemäß einer Ausgestaltung wird vorgeschlagen, dass zum Erkennen auf einen Eisansatz in einem vorgegebenen Prüfzeitraum mehrfach geprüft wird, ob die erfasste Betriebsgröße von dem Referenzwert wenigstens um eine vorbestimmte Mindestabweichung abweicht, und nur dann von einem Eisansatz ausgegangen wird, wenn die Prüfung mehrfach positiv war, insbesondere in dem vorgegebenen Prüfzeitraum überwiegend positiv war. Damit kann verhindert werden, dass besonders eine Fehlmessung, bspw. bei der Messung der Windgeschwindigkeit, zu einem Überschreiten der Mindestabweichung führt und dann von einem Eisansatz ausgegangen wird, obwohl tatsächlich keiner vorliegt. Mit anderen Worten wird ein Fehlalarm oder eine Fehlerkennung eines Eisansatzes vermieden. Dafür wird somit vorgeschlagen, dass die Messung über den vorgegebenen Prüfzeitraum dauerhaft zu dem Ergebnis führt, dass ein Eisansatz vorliegt. Zumindest sollte in dem vorgegebenen Prüfzeitraum, der bspw. im Bereich von 5 Sekunden bis 1 Minute liegen kann, wenigstens zweimal die Mindestabweichung erreicht werden. Vorzugsweise sollte diese Mindestabweichung während des gesamten Prüfzeitraums erreicht werden und somit kommt in Betracht, dass dann, wenn auf eine positive Prüfung eine negative Prüfung folgt, die erste positive Prüfung wieder verworfen wird und die nächste positive Prüfung dann als erster Wert angesehen wird. Eine Möglichkeit ist, dass in dem Prüfzeitraum eine Mindestanzahl an positiven Prüfungen mehr als die Anzahl negativer Prüfungen aufgetreten sein muss.

Gemäß einer Ausgestaltung wird vorgeschlagen, dass von einem unteren Windgeschwindigkeitsbereich, der von einer Anlaufwindgeschwindigkeit, bei der die Windenergieanlage anläuft, oder von einer Windgeschwindigkeitsrelevanzschwelle, die eine Windgeschwindigkeit oberhalb der Anlaufwindgeschwindigkeit bezeichnet und insbesondere Werte bis zu 4m/s oder 5m/s aufweist, bis zu einer Nennwindgeschwindigkeit reicht, drei gleich große Abschnitte betrachtet werden. Jeder dieser drei Abschnitte bildet also ein Drittel des unteren Windgeschwindigkeitsbereichs. Davon reicht ein erster Windgeschwindigkeitsabschnitt von der Anlaufwindgeschwindigkeit bis zu einer ersten Abschnittswindgeschwindigkeit. Ein zweiter Windgeschwindigkeitsabschnitt reicht von der ersten Abschnittswindgeschwindigkeit bis zu einer zweiten Abschnittswindgeschwindigkeit. Der zweite Windgeschwindigkeitsabschnitt bildet also das mittlere Drittel des unteren Windgeschwindigkeitsbereichs. Schließlich reicht ein dritter Windgeschwindigkeitsabschnitt von der zweiten Abschnittswindgeschwindigkeit bis zur Nennwindgeschwindigkeit. Der dritte Windgeschwindigkeitsabschnitt bildet also das letzte bzw. obere Drittel des unteren Windgeschwindigkeitsbereichs.

Für diese drei Windgeschwindigkeitsabschnitte wird das Folgende vorgeschlagen. Es wird nämlich vorgeschlagen, dass die Mindestabweichung in jedem der drei Windgeschwindigkeitsabschnitte mit steigender Windgeschwindigkeit zunimmt und außerdem die Mindestabweichung kontinuierlich vom ersten Windgeschwindigkeitsabschnitt bis zum dritten Windgeschwindigkeitsabschnitt mit steigender Windgeschwindigkeit zunimmt. Es wird also eine Zunahme der Mindestabweichung bei steigender Windgeschwindigkeit sowohl für die Bereiche innerhalb der genannten drei Abschnitte vorgeschlagen, als auch für den übergreifenden Bereich vom ersten zum dritten Windgeschwindigkeitsabschnitt.

Es wird somit für die Mindestabweichung eine sehr konkrete im Wesentlichen dauerhafte Zunahme für den gesamten Teillastbetrieb vorgeschlagen, die ggf. erst ab einer Windgeschwindigkeitsrelevanzschwelle beginnt, wobei die Windgeschwindigkeitsrelevanzschwelle Werte bis zu 5m/s, vorzugsweise bis zu 4m/s aufweisen kann. Hier wurde besonders erkannt und durch die Vorschläge umgesetzt, dass die Mindestabweichung, die auf einen Eisansatz hindeutet, dauerhaft und kontinuierlich und insbesondere auch signifikant mit der Windgeschwindigkeit zunimmt, nicht nur für einen kleinen Bereich. Diese Zunahme im Teillastbetrieb, der auch synonym als Teillastbereich bezeichnet werden kann, wird besonders dafür vorgeschlagen, dass als Betriebsgröße eine von der Windenergieanlage aus dem Wind erzeugte Abgabeleistung erfasst wird und sich somit die Mindestabweichung auf eine Abweichung relativ zu einer Referenzleistung bezieht. Die Leistungsabweichung, aus der ein Eisansatz abgeleitet wird, wird somit mit steigender Windgeschwindigkeit kontinuierlich und signifikant im Wesentlichen über den gesamten Teillastbetrieb erhöht.

Außerdem oder alternativ wird vorgeschlagen, dass zusätzlich dazu, dass die Mindestabweichung in jedem der drei Windgeschwindigkeitsabschnitte mit steigender Windgeschwindigkeit zunimmt, eine mittlere Mindestabweichung des dritten Windgeschwindigkeitsabschnitts wenigstes um 50 % über einer mittleren Mindestabweichung des zweiten Windgeschwindigkeitsabschnitts liegt, und die mittlere Mindestabweichung des zweiten Windgeschwindigkeitsabschnitts wenigstens um 50 % über einer mittleren Mindestabweichung des ersten Windgeschwindigkeitsabschnitts liegt. Zumindest sollte eines dieser beider Kriterien vorliegen.

Wenn aber vorzugsweise beide Kriterien vorliegen, liegt die mittlere Mindestabweichung des dritten Windgeschwindigkeitsabschnitts mehr als doppelt so hoch wie die mittlere Mindestabweichung des ersten Windgeschwindigkeitsabschnitts. Die Mindestabweichung steigt also mit zunehmender Windgeschwindigkeit im Teillastbetrieb signifikant an. Auch dies betrifft vorzugsweise den Fall, dass als Betriebsgröße die von der Windenergieanlage erzeugte Abgabeleistung betrachtet wird und entsprechend die Mindestabweichung die Abweichung der Abgabeleistung in Bezug auf eine Referenzleistung betrifft. Hier kommt besonders aber auch in Betracht, dass als Betriebsgröße ein Drehmoment, besonders ein Generatordrehmoment der Windenergieanlage betrifft und entsprechend die Mindestabweichung eine Abweichung dieses Drehmomentes bzw. Generatormomentes von einem Referenzmoment betrifft.

Erfindungsgemäß wird auch eine Windenergieanlage nach Anspruch 15 vorgeschlagen und eine solche Windenergieanlage weist einen Rotor mit wenigstens einem Rotorblatt auf und der Rotor ist mit einer variablen Drehzahl betreibbar. Diese Windenergieanlage umfasst eine Steuerungseinheit, die dazu vorbereitet ist, einen Eisansatz an dem wenigsten einen Rotorblatt zu erkennen. Die Windenergieanlage und insbesondere die Steuerungseinheit sind dabei insbesondere dazu vorbereitet, ein Verfahren gemäß wenigstens einer vorstehend beschriebenen Ausführungsform auszuführen.

Die Windenergieanlage weist auch eine Windmesseinrichtung zum Erfassen einer Windgeschwindigkeit eines auf den Rotor wirkenden Windes auf. Das kann ein Gondelanemometer, oder ein LIDAR-Messgerät sein, um zwei Beispiele zu nennen. Es kommt auch in Betracht, dass mehrere Windmesseinrichtungen vorhanden sind, um eine Messredundanz gewährleisten zu können. Vorzugsweise können mehrere Windmesseinrichtungen verwendet werden, um eine Messgenauigkeit zu erhöhen.

Außerdem ist eine Erfassungseinrichtung vorgesehen, die eine von der Windgeschwindigkeit abhängige Betriebsgröße erfasst. Das kann besonders eine Abgabeleistung oder ein Blattwinkel sein. Die Erfassung kann so erfolgen, dass in einem Steuerungsrechner der Windenergieanlage, insbesondere in der Steuerungseinheit bereits Informationen oder Signale über die gewünschte Betriebsgröße vorliegen und die Erfassungseinrichtung diese Informationen lediglich abruft und weiter verarbeitet. Die Erfassungseinrichtung kann dabei auch Teil der Steuerungseinheit sein.

Außerdem ist ein Komparator vorgesehen, um die erfasste Betriebsgröße oder die erfasste Windgeschwindigkeit mit einer Referenzgröße einer charakteristischen windgeschwindigkeitsabhängigen Betriebsgrößenkurve der Windenergieanlage zu vergleichen. Dieser Komparator kann Teil der Erfassungseinrichtung sein und/oder er kann Teil der Steuerungseinheit sein. Die charakteristische Betriebsgrößenkurve kann bspw. eine windgeschwindigkeitsabhängige Leistungskurve und/oder eine windgeschwindigkeitsabhängige Blattwinkelkurve sein.

Außerdem ist eine Auswerteeinheit vorgesehen, die dazu vorbereitet ist, auf einen Eisansatz an dem Rotorblatt zu erkennen, wenn die erfasste Betriebsgröße bzw. die erfasste Windgeschwindigkeit von der Referenzgröße wenigstens um eine vorbestimmte Mindestabweichung abweicht. Die Auswerteinheit kann ein eigener Prozessrechner sein, oder Teil der Steuereinheit, der Erfassungseinrichtung und/oder des Komparators sein.

Außerdem ist eine Vorgabeeinheit vorgesehen, die dazu vorbereitet ist, die Mindestabweichung in Abhängigkeit der Windgeschwindigkeit vorzugeben. Dazu erhält die Vorgabeeinheit einen Windgeschwindigkeitswert, den sie besonders von der Windmesseinrichtung erhält, oder von einer nachgelagerten Schätzeinrichtung, und die abhängig davon die Mindestabweichung vorgibt. Auch die Vorgabeeinheit kann Teil einer der vorgenannten Einrichtungen sein, insbesondere Teil der Steuerungseinheit. Die Vorgabe der Mindestabweichung kann auch darin bestehen, dass eine windgeschwindigkeitsabhängige Abweichungskurve hinterlegt ist, auf die die Auswerteeinheit zugreift, wenn sie prüft, ob die erfasste Betriebsgröße von der Referenzgröße wenigstens um eine vorbestimmte Mindestabweichung abweicht. Das wäre nämlich dann der Fall, wenn die Betriebsgröße die Abweichungskurve erreicht oder unterschreitet.

Nachfolgend wird die Erfindung nun anhand von Ausführungsformen unter Bezugnahme auf die begleitenden Figuren beispielhaft näher erläutert.
- Figur 1: zeigt eine Windenergieanlage in einer perspektivischen Darstellung.
- Figur 2: zeigt ein Diagramm in der eine Abweichung einer Betriebsgröße zwischen Normalbetrieb und Betrieb mit Eisansatz dargestellt ist.
- Figur 3: zeigt ein Diagramm ähnlich wie Figur 2, allerdings für einen in der Leistung begrenzten Betrieb.
- Figur 4: zeigt ein Diagramm mit windgeschwindigkeitsabhängigen Verläufen von Betriebsgrößen nebst vorgeschlagener Mindestabweichungen bzw. zugehörigen Abweichungskurven.
- Figur 5: zeigt ein Blockdiagramm zum Bestimmen von Abweichungskurven schematisch.
- Figur 6: zeigt ein Blockschaltbild für eine Variante einen Eisansatz basierend auf einer Windklassifikation zu erkennen.

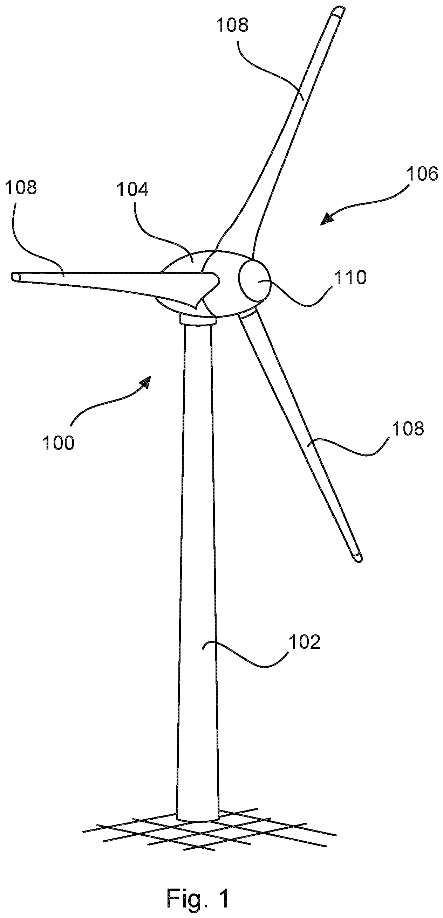

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

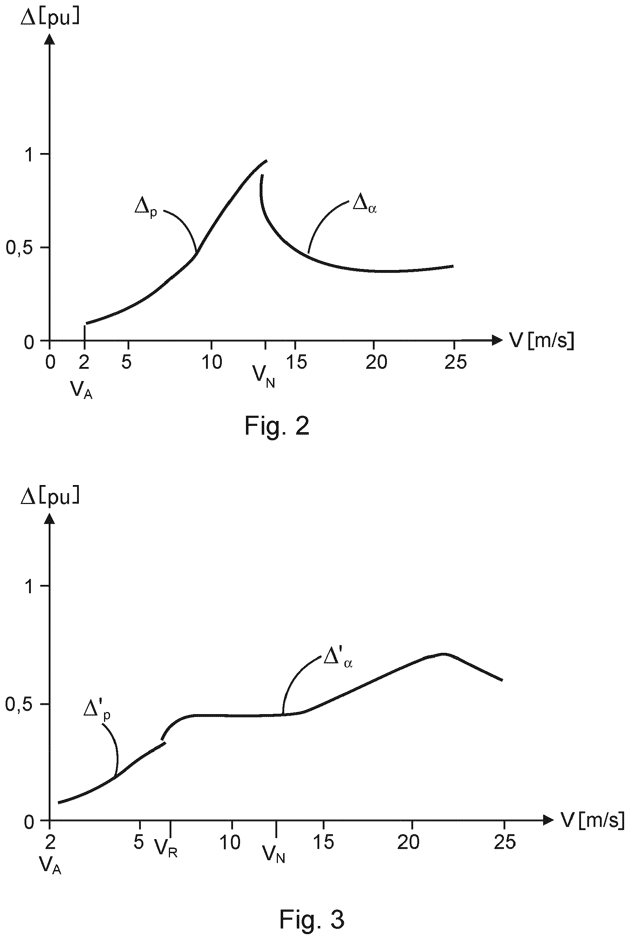

Figur 2 zeigt in einem Diagramm den Verlauf einer Abweichung Δ einer erfassten Windgeschwindigkeit von einer einer erfassten Betriebsgröße zugeordneten Windgeschwindigkeit, und die Abweichung, die somit als Windgeschwindigkeitsabweichung bezeichnet wird, ist in Abhängigkeit der Windgeschwindigkeit V dargestellt. Die Windgeschwindigkeit V ist dabei an der Abszisse mit der Einheit m/s abgetragen. Die Abweichung Δ ist auf ein Abweichungsmaß normiert. Als Abweichungsmaß zur Normierung kann die Abweichung bei Nennwindgeschwindigkeit V_{N} verwendet werden. Es wurde erkannt, dass solche Windgeschwindigkeitsabweichungen zwischen Normalbetrieb und Betrieb mit Eisansatz von der Windgeschwindigkeit abhängen und daher wurden dazu weitergehende Untersuchungen angestellt. In Simulationen wurden Betriebsgrößen in einem Betrieb ohne Eisansatz mit jeweils derselben Betriebsgröße in einem Betrieb mit Eisansatz verglichen und die Abweichungen, die sich für die zugeordneten Windgeschwindigkeiten ergeben haben, in Abhängigkeit der Windgeschwindigkeit betrachtet. Ein solches Ergebnis ist in Figur 2 dargestellt. Dabei zeigt die Figur 2 in einem Teillastbetrieb von einer Anlaufwindgeschwindigkeit V_{A} bis zur Nennwindgeschwindigkeit v_{N} die Abweichung einer der erfassten Abgabeleistung zugeordneten Windgeschwindigkeit, die hier als der Abgabeleistung zugeordneten Windgeschwindigkeitsabweichung Δ_{P} bezeichnet wird, zwischen ungestörtem Betrieb und Betrieb mit Eisansatz. Die Darstellung der Figur 2, gleiches gilt für die Figur 3, zeigt dabei den betragsmäßigen Verlauf der jeweiligen Abweichung.

Es ist zu erkennen, dass bei der Anlaufwindgeschwindigkeit V_{A}, die hier etwa 2 m/s beträgt, die Windgeschwindigkeitsabweichung Δ_{P} einen vergleichsweise geringen Wert von etwa 0,1 aufweist. Bis zur Nennwindgeschwindigkeit V_{N} steigt diese der Abgabeleistung zugeordneten Windgeschwindigkeitsabweichung Δ_{P} etwa bis auf den Wert 1 an. Daraus wurde der Gedanke abgeleitet, eine Mindestabweichung ebenfalls von der Anlaufwindgeschwindigkeit V_{A} bis zur Nennwindgeschwindigkeit V_{N} ansteigen zu lassen, wobei die Mindestabweichung jeweils dem Betrage nach etwas geringer sein sollte, als die gezeigte der Abgabeleistung zugeordneten Windgeschwindigkeitsabweichung Δ_{P}.

Etwa bei Nennwindgeschwindigkeit V_{N} wird die Windenergieanlage mit Nennleistung betrieben und die Rotorblätter dann mit weiter steigender Windgeschwindigkeit nach und nach weiter aus dem Wind gedreht. Deshalb wird ab Nennwindgeschwindigkeit V_{N} als Betriebsgröße zum Erkennen eines Eisansatzes ein Blattwinkel betrachtet. Figur 2 zeigt dazu die Abweichung der dem Blattwinkel zugeordneten Windgeschwindigkeit, die hier als dem Blattwinkel zugeordneten Windgeschwindigkeitsabweichung Δ_{α} bezeichnet wird, für einen Betrieb ohne Eisansatz und mit Eisansatz. Auch hier wird die Abweichung dem Betrage nach dargestellt. Auch hier wurde somit herausgefunden, dass die dem Blattwinkel zugeordneten Windgeschwindigkeitsabweichung Δ_{α} zwischen Normalbetrieb und Betrieb mit Eisansatz von der Windgeschwindigkeit abhängt. Dabei wurde herausgefunden, dass die Abhängigkeit so ist, dass die dem Blattwinkel zugeordneten Windgeschwindigkeitsabweichung Δ_{α} mit zunehmender Windgeschwindigkeit im Wesentlichen abnimmt. Daraus wurde die Vorschrift abgeleitet, eine Mindestabweichung für die dem Blattwinkel zugeordneten Windgeschwindigkeitsabweichung zum Erkennen eines Eisansatzes ebenfalls von der Windgeschwindigkeit abhängig vorzugeben, allerdings so, dass die Mindestabweichung dem Betrage nach etwas kleiner ist als die untersuchte dem Blattwinkel zugeordneten Windgeschwindigkeitsabweichung für Betrieb mit und ohne Eisansatz.

Figur 3 zeigt im Grunde ein ganz ähnliches Diagramm wie Figur 2, aber mit dem Unterschied, dass hier die Windenergieanlage stark abgeregelt ist. Sie ist nämlich auf eine Leistung abgeregelt, die sie im Teillastbetrieb etwa bei 8 Metern pro Sekunde (m/s) erreichen würde. Diese Windgeschwindigkeit ist als reduzierte Windgeschwindigkeit V_{R} in der Figur an der Abszisse eingezeichnet. Somit ist es auch nur zweckmäßig, die Abgabeleistung bis zu dieser reduzierten Windgeschwindigkeit V_{R} zu betrachten und daher enthält das Diagramm der Figur 3 eine der Abgabeleistung zugeordneten Windgeschwindigkeitsabweichung Δₚ' nur von der Anlaufwindgeschwindigkeit V_{A} bis zu dieser reduzierten Windgeschwindigkeit V_{R}. Es ist zu beachten, dass die Darstellung der Figur 3 im Gegensatz zur Darstellung der Figur 2 nicht bei 0, sondern bei der Anlaufwindgeschwindigkeit V_{A} beginnt, was technisch ohne Bedeutung ist. Vorzugsweise wird vorgeschlagen, eine Erhöhung der der Abgabeleistung zugeordneten Windgeschwindigkeitsabweichung mit steigender Windgeschwindigkeit erst ab einer Windgeschwindigkeitsrelevanzschwelle vorzusehen, die hier eine Windgeschwindigkeit von etwa 3m/s beschreibt.

Der Verlauf der der Abgabeleistung zugeordneten Windgeschwindigkeitsabweichung Δₚ' der Figur 3 entspricht grundsätzlich, auch quantitativ, dem Verlauf der der Abgabeleistung zugeordneten Windgeschwindigkeitsabweichung Δₚ der Figur 2, außer dass in Figur 3 der Verlauf der der Abgabeleistung zugeordneten Windgeschwindigkeitsabweichung Δₚ' bei der reduzierten Windgeschwindigkeit V_{R} endet.

Somit übernimmt dann die Blattverstellung die Regelung der Windenergieanlage ab der reduzierten Windgeschwindigkeit V_{R}. Entsprechend ist ab der reduzierten Windgeschwindigkeit V_{R} der Verlauf einer dem Blattwinkel zugeordneten Windgeschwindigkeitsabweichung Δ_{α} untersucht und dargestellt. Der Verlauf der dem Blattwinkel zugeordneten Windgeschwindigkeitsabweichung Δ_{α}' bei abgeregeltem Betrieb gemäß Figur 3 unterscheidet sich allerdings signifikant von dem Verlauf der dem Blattwinkel zugeordneten Windgeschwindigkeitsabweichung Δ_{α} der Figur 2. In Figur 3 ist zu erkennen, dass der Verlauf der dem Blattwinkel zugeordneten Windgeschwindigkeitsabweichung Δ_{α}' von der reduzierten Windgeschwindigkeit V_{R} beginnend mit zunehmender Windgeschwindigkeit ansteigt, auch über die Nennwindgeschwindigkeit V_{N} hinaus. Erst bei hohen Windgeschwindigkeiten von über 22 Metern pro Sekunde (m/s) ist ein leichter Abfall zu erkennen.

Daraus wurde als Steuerungsvorschrift abgeleitet, die Mindestabweichung für die dem Blattwinkel zugeordneten Windgeschwindigkeitsabweichung bei nicht abgeregeltem Betrieb der Windenergieanlage mit zunehmender Windgeschwindigkeit kleiner einzustellen, wohingegen sie bei einer signifikant abgeregelten Windenergieanlage mit zunehmender Windgeschwindigkeit höher eingestellt wird.

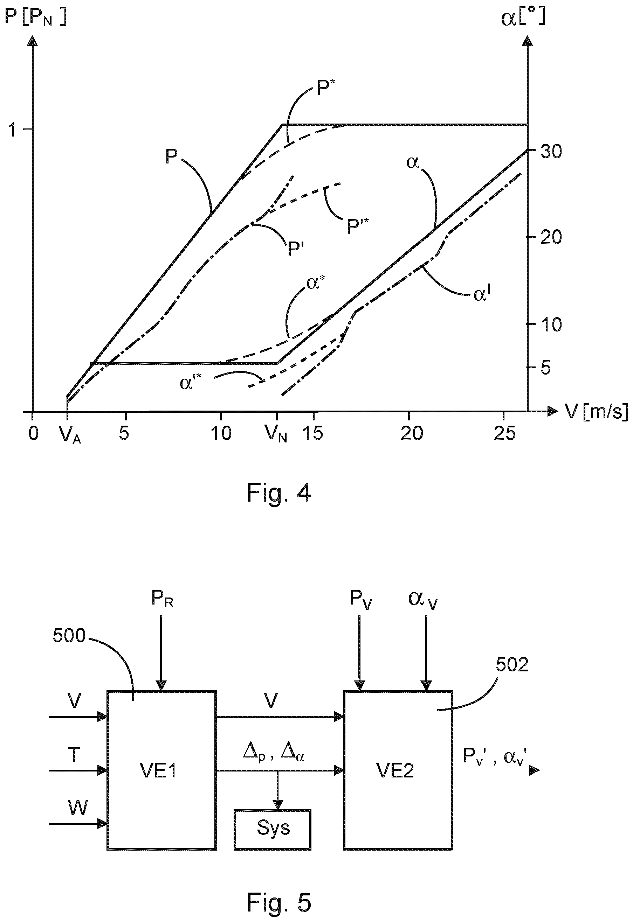

Figur 4 zeigt schematisch ein Diagramm mit einem Leistungsverlauf P und einem Blattwinkelverlauf α. Besonders die linearen Verläufe der Leistung P bzw. des Blattwinkels α sind stark vereinfacht und dienen der Veranschaulichung.

Der Figur 4 liegt ein Regelungskonzept zugrunde, bei dem die Windenergieanlage angefahren wird, wenn die Windgeschwindigkeit V die Anlaufwindgeschwindigkeit V_{A} erreicht. Diese Anlaufwindgeschwindigkeit V_{A} ist so gewählt, dass dann bereits ein kleiner Teil Leistung erzeugt werden kann. Im Teillastbetrieb, der von der Anlaufwindgeschwindigkeit V_{A} bis zur Nennwindgeschwindigkeit V_{N} reicht, kann mit zunehmender Windgeschwindigkeit eine höhere Leistung P erzeugt werden. Die Regelung dazu kann so ausgestaltet sein, dass eine Drehzahlleistungskennlinie zugrunde gelegt wird und basierend auf dieser Drehzahlleistungskennlinie jeweils eine Leistung P abhängig einer erfassten Drehzahl eingestellt wird. Dabei ergibt sich idealerweise zu jeder Windgeschwindigkeit V ein Wert auf der Leistungskurve P. Diese Abhängigkeit ist bekannt bzw. sollte möglichst genau bekannt sein.

Erreicht die Windgeschwindigkeit die Nennwindgeschwindigkeit V_{N} und steigt weiter an, so erreicht die Leistung P den Wert der Nennleistung P_{N}. Bis dahin ist der Blattwinkel α konstant geblieben, im Beispiel auf 5°. Ab der Nennwindgeschwindigkeit V_{N} werden dann aber die Rotorblätter mit zunehmender Windgeschwindigkeit aus dem Wind gedreht und entsprechend vergrößert sich der Blattwinkel α mit weiter zunehmender Windgeschwindigkeit. Auch daraus ist ein sich abhängig von der Windgeschwindigkeit einstellender Blattwinkel α ableitbar. Das zeigt die entsprechend durchgezogene Blattwinkelkurve für den Blattwinkel α.

Sowohl die Leistung P als auch der Blattwinkel α bilden jeweils eine Betriebsgröße der Windenergieanlage. Zu dieser Betriebsgröße wird nun überwacht, ob sie unter die Abweichungskurve fällt, die in Figur 4 strichpunktiert eingezeichnet ist. Für den Teillastbetrieb ist die Leistung P die relevante Betriebsgröße und entsprechend zeigt die zugehörige Abweichungskurve den Verlauf einer Leistung P'. Wird diese Abweichungskurve der Leistung P' unterschritten, wird von einem Eisansatz ausgegangen.

Entsprechend ist für den Windgeschwindigkeitsbereich ab der Nennwindgeschwindigkeit V_{N} eine Abweichungskurve für den Blattwinkel α' ebenfalls strichpunktiert eingezeichnet. Fällt in diesem Bereich der Blattwinkel α unter die Abweichungskurve des Blattwinkels α', so wird von einem Eisansatz ausgegangen.

Es wird nun vorgeschlagen, dass die Mindestabweichung sowohl für die Betriebsgröße der Leistung P als auch der Betriebsgröße des Blattwinkels α in Abhängigkeit der Windgeschwindigkeit vorgegeben wird. Das bedeutet, dass die jeweilige Abweichungskurve von zugehörigen Betriebsgrößenkurve je nach Windgeschwindigkeit unterschiedlich stark abweicht. Für den Teillastbetrieb nimmt dabei die Mindestabweichung mit zunehmender Windgeschwindigkeit zu. Entsprechend nimmt der Abstand zwischen der Leistungskurve P und der Abweichungskurve der Leistung P' mit zunehmender Windgeschwindigkeit zu.

Alternativ kann auch hier die zugeordnete Windgeschwindigkeit betrachtet werden, also, anschaulich gesprochen, die Abweichung zwischen der Leistungskurve P und der Abweichungskurve der Leistung P' in horizontaler Richtung. Auch die nimmt mit zunehmender Windgeschwindigkeit zu.

Für den Blattwinkel als Betriebsgröße im Volllastbetrieb, also ab Nennwindgeschwindigkeit V_{N} wird vorgeschlagen, dass die Mindestabweichung mit zunehmender Windgeschwindigkeit kleiner wird. Deshalb verringert sich der Abstand zwischen der Betriebsgrößenkurve das Blattwinkels α und der Abweichungskurve des Blattwinkels α' mit zunehmender Windgeschwindigkeit. Sowohl die Abweichungskurve der P' als auch die Abweichungskurve des Blattwinkels α' weisen angedeutete Stufen auf, bei denen sich der Abstand zwischen der Abweichungskurve und der zugehörigen Betriebsgrößenkurve dann ändert. Das ist aber nur eine Möglichkeit der Veränderung der jeweils zugrundeliegenden Mindestabweichung und es kommt ebenso bspw. ein gerader Verlauf jeder der Abweichungskurven in Betracht.

Alternativ kann auch hier die zugeordnete Windgeschwindigkeit betrachtet werden, also, anschaulich gesprochen, die Abweichung zwischen der Betriebsgrößenkurve das Blattwinkels α und der Abweichungskurve des Blattwinkels α' in horizontaler Richtung. Auch die nimmt mit zunehmender Windgeschwindigkeit ab.

In Figur 4 ist zudem eine Variation angedeutet, demnach nämlich ein Übergangsbereich vom Teillastbetrieb zum Volllastbetrieb vorgesehen ist. Gemäß einem solchen Übergangsbereich werden die Rotorblätter bereits vor Erreichen der Nennwindgeschwindigkeit V_{N} verstellt, was durch eine gestrichelte Linie dargestellt und als Blattwinkel α* gekennzeichnet ist. Dadurch reduziert sich die Leistung P auch etwas eher und entsprechend ist dazu eine Leistung P* ebenfalls mit einer gestrichelten Linie für den Übergangsbereich eingezeichnet. Entsprechend ändert sich für den Bereich auch die jeweilige Abweichungskurve und dieser geänderte Abschnitt ist jeweils sowohl für die Abweichungskurve der Leistung P'* als auch für Abweichungskurve des Blattwinkels α'* als ein gepunkteter Linienabschnitt eingezeichnet. Im Übergangsbereich wird somit vorgeschlagen, sowohl für die Abweichungskurve der Leistung P'* als auch für die Abweichungskurve des Blattwinkels α'* zu überwachen, ob die entsprechende Betriebsgröße die entsprechende Abweichungskurve unterschreitet.

Figur 5 zeigt als eine Ausführungsform eine erste Vorgabeeinheit 500, die als Eingangsgrößen eine Windgeschwindigkeit V, eine Außentemperatur T und Windfelddaten W erhält. Außerdem berücksichtigt die Vorgabeeinheit 500, ob die Windenergieanlage abgeregelt wird, und falls ja, in welcher Höhe. Dazu erhält sie die Abregelungsleistung P_{R}. Entspricht diese Abregelungsleistung P_{R} der Nennleistung der Windenergieanlage, wird entsprechend nicht abgeregelt. Liegt sie aber bspw. signifikant darunter und weist bspw. nur einen Wert von 40 % der Nennleistung P_{N} auf, so erkennt die Vorgabeeinheit 500, dass ein reduzierter bzw. abgeregelter Betrieb vorliegt.

Abhängig von diesen Eingangsgrößen wird dann sowohl eine Mindestabweichung für die Leistung Δ_{P} als auch eine Mindestabweichung für den Blattwinkel Δ_{α} bestimmt. Diese können unmittelbar als Kriterium verwendet werden, um auf einen Eisansatz zu erkennen. Alternativ kann jeweils eine Mindestabweichung für eine zugeordnete Windgeschwindigkeit bestimmt werden, um davon abhängig auf einen Eisansatz zu erkennen.

Alternativ oder ergänzend kann davon abhängig in einer zweiten Vorgabeeinheit 502 eine Abweichungskurve für die Leistung Pv' und eine Abweichungskurve für den Blattwinkel α_{V}' bestimmt werden. Dazu benötigt die zweite Vorgabeeinheit 502 neben den jeweiligen Mindestabweichungen die Betriebsgrößenkurven, nämlich für die Leistung Pv und den Blattwinkel α_{V}. Außerdem ist die Zuordnung zur jeweiligen Windgeschwindigkeit V erforderlich und dazu kann die Windgeschwindigkeit V von der ersten Vorgabeeinheit 500 an die zweite Vorgabeeinheit 502 übergeben werden. Alternativ kann jeweils eine Mindestabweichung für eine zugeordnete Windgeschwindigkeit bestimmt und an die Vorgabeeinheit 502 übergeben werden.

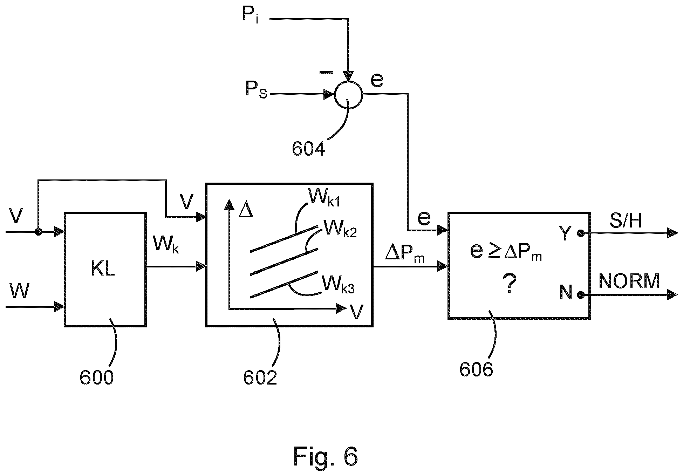

Figur 6 zeigt eine Variante, die zum Erkennen eines Eisansatzes wenigstens die Windgeschwindigkeit V und Windfeldparameter W berücksichtigt. Dazu werden diese Parameter einem Klassifizierungsblock übergeben. Der Klassifizierungsblock 600 leitet aus diesen Parametern jeweils eine Windklasse ab. Diese Windklasse wird dann in einen Vorgabeblock 602 übergeben, der zusätzlich die Windgeschwindigkeit V als Eingangsgröße erhält. Der Vorgabeblock 602 berechnet dann aus der Windgeschwindigkeit und der ermittelten Windklasse WK eine Mindestabweichung ΔPₘ. Figur 6 beschreibt insoweit ein Beispiel, bei dem die betrachtete Betriebsgröße die Leistung der Windenergieanlage darstellt. Gleichermaßen und parallel kann dies auch auf andere Betriebsgrößen wie bspw. den Blattwinkel angewendet werden. Ebenso kann alternativ statt der Betriebsgrö-ßen jeweils die zugeordnete Windgeschwindigkeit betrachtet werden.

Der Vorgabeblock 602 kann auf ein hinterlegtes Kennfeld zurückgreifen, das in der Figur 6 in dem Block 602 angedeutet ist. Ein solches Kennfeld kann verschiedene windgeschwindigkeitsabhängige Mindestabweichungen aufweisen und dazu ist in dem Vorgabeblock 602 ein Beispiel angedeutet, demnach drei von der Windgeschwindigkeit V abhängige Verläufe der Mindestabweichung Δ eingezeichnet sind und je nach Windklasse als Wₖ₁, Wₖ₂ oder Wₖ₃ gekennzeichnet sind.

Der Vorgabeblock 602 wählt also abhängig der Windklasse Wₖ, die er von dem Klassifizierungsblock 600 erhalten hat, eine entsprechende Kennlinie aus. Abhängig der Windgeschwindigkeit V, die er ebenfalls erhält, wählt der Vorgabeblock 602 dann gemäß der konkret ausgewählten Kennlinie die konkrete Mindestabweichung Δ aus, nämlich abhängig der Windgeschwindigkeit V. Das Ergebnis wird ausgegeben und ist am Ausgang des Vorgabeblocks 602 als vorbestimmte Mindestabweichung ΔPₘ gezeigt.

Zur Auswertung wird nun zunächst ein Vergleich mit der gemessenen Leistung Pᵢ und der vorgegebenen Leistung Ps vorgenommen. Die vorbestimmte Leistung Ps kann aus einer vorgegebenen Windgeschwindigkeitsleistungskurve genommen werden, was in Figur 6 nicht weiter dargestellt ist. Der Vergleich kann durch eine Differenz in dem Summierglied 604 vorgenommen werden. Alternativ können hier auch Windgeschwindigkeiten verglichen werden, indem statt der gemessenen Leistung Pᵢ eine gemessene, also erfasste Windgeschwindigkeit verwendet wird. Außerdem wird mit der gemessenen Leistung Pᵢ in einer vorgegebenen Windgeschwindigkeits-Leistungs-Kurve, die als charakteristische Betriebsleistungskurve bezeichnet werden kann, die zugeordnete Windgeschwindigkeit ermittelt, also bspw. abgelesen. Diese zugeordnete Windgeschwindigkeit wird dann statt der vorgegebenen Leistung Ps als zugeordnete Windgeschwindigkeit zur Differenzbildung mit der gemessenen Windgeschwindigkeit in das Summierglied 604 gegeben.

Das Ergebnis dieses Vergleichs, sei es nun der Vergleich der Betriebsgrößen oder der Windgeschwindigkeiten, wird als Abweichung e in Figur 6 gekennzeichnet. Diese Abweichung e und die vorbestimmte Mindestabweichung ΔPₘ werden dann in den Auswerteblock 606 gegeben. Falls die Abweichung der Windgeschwindigkeiten verwendet wird, ist die vorbestimmte Mindestabweichung ΔPₘ natürlich entsprechend daran angepasst.

In dem Auswerteblock 606 wird geprüft, ob die Abweichung e größer oder gleich der vorbestimmten Mindestabweichung ΔPₘ ist. Ist das der Fall, wird von einem Eisansatz ausgegangen und die Windenergieanlage kann dann gestoppt werden und außerdem oder alternativ kann ein Heizprozess gestartet werden, um das Eis von den Rotorblättern abzutauen. Das ist am Ausgang des Auswerteblocks 606 als S/H gekennzeichnet.

Andernfalls arbeitet die Windenergieanlage normal weiter, was an dem Ausgang des Auswerteblocks 606 als NORM bezeichnet ist.

Es wurde somit erkannt, dass die Verwendung eines lediglich konstanten Schwellenwertes mehrere gravierende Nachteile aufweisen kann, und es wird ein Lösungsvorschlag unterbreitet, der eine Verbesserung zum Stand der Technik darstellt. Es ist bekannt, dass Eis die aerodynamischen Eigenschaften des Rotorblattprofils verschlechtert. Typischerweise verringern sich der Auftriebsbeiwert und Stallwinkel, also der Anstellwinkel bei dem eine Strömungsablösung am umströmten Blattprofil auftritt. Weiterhin erhöht sich der Widerstandsbeiwert, womit durch den verringerten Auftrieb sich auch die Gleitzahl deutlich verschlechtert. Dabei wurde erkannt, dass alle diese aufgeführten Einflüsse auf die aerodynamischen Eigenschaften des Rotorblattprofils zur Folge haben können, dass eine Anlage im Betriebsbereich über die abgefahrenen Windgeschwindigkeiten höchst unterschiedlich im Leistungsverhalten auf die Eisbildung reagiert und darüber hinaus dieses windgeschwindigkeitsabhängige Verhalten von Anlagentyp zu Anlagentyp stark variieren kann.

Dies ist unter anderem dadurch begründet, dass von Anlagentyp zu Anlagentyp die Eigenschaften der verwendeten Rotorblattprofile unterschiedlich sein können, und die zur Rotorblattauslegung gewählten Auslegungsphilosophien aufgrund unterschiedlicher Windklassenanforderungen stark voneinander abweichen können, was ebenfalls erkannt wurde. Es wird daher vorgeschlagen, vom konstanten Schwellenwert zur Eisansatzerkennung im Leistungskurvenverfahren nach Stand der Technik abzuweichen und den Schwellenwert in Richtung eines windgeschwindigkeitsabhängigen Schwellenwertes weiter zu entwickeln. Ein solcher, vorgeschlagener windgeschwindigkeitsabhängiger Schwellenwert ist dabei anlagen- bzw. rotorblattspezifisch, sodass vorgeschlagen wird, die Funktion des Schwellenwertes für jeden Anlagentyp separat zu definieren. Dies wird als eine wesentliche Weiterentwicklung zum Stand der Technik angesehen, der nur einen universellen Schwellenwert kennt.

## Patentansprüche

1. Verfahren zum Erkennen eines Eisansatzes an einem Rotorblatt eines Rotors einer Windenergieanlage (100), wobei der Rotor mit einer variablen Drehzahl betreibbar ist,
umfassend die Schritte:
- Erfassen einer Windgeschwindigkeit (V) eines auf den Rotor wirkenden Windes,
- Erfassen einer von der Windgeschwindigkeit (V) abhängigen Betriebsgröße,
- Vergleichen der erfassten Betriebsgröße oder der erfassten Windgeschwindigkeit (V) mit einer Referenzgröße einer charakteristischen windgeschwindigkeitsabhängigen Betriebsgrößenkurve der Windenergieanlage (100), wobei die charakteristische Betriebsgrößenkurve eine als optimal angenommene Betriebsgröße in Abhängigkeit der Windgeschwindigkeit (V) angibt,
- Erkennen auf einen Eisansatz an dem Rotorblatt, wenn die erfasste Betriebsgröße bzw. die erfasste Windgeschwindigkeit (V) von der Referenzgröße wenigstens um eine vorbestimmte Mindestabweichung abweicht, wobei
- die Mindestabweichung in Abhängigkeit der Windgeschwindigkeit vorgegeben wird, wobei
- für Windgeschwindigkeiten unterhalb einer Nennwindgeschwindigkeit (V_{N}) eine von der Windenergieanlage (100) aus dem Wind erzeugte Abgabeleistung als Betriebsgröße erfasst wird,
- für Windgeschwindigkeiten oberhalb einer Nennwindgeschwindigkeit (V_{N}) ein zum Begrenzen der Abgabeleistung eingestellter Blattwinkel als Betriebsgröße erfasst wird, und
- auf einen Eisansatz erkannt wird, wenn
- die erfasste Abgabeleistung (P_{R}) von der Referenzleistung wenigstens um eine vorbestimmte Mindestabweichungsleistung abweicht und/oder
- der erfasste Blattwinkel von dem Referenzwinkel wenigstens um einen vorbestimmten Mindestabweichungswinkel abweicht und/oder
- die erfasste Windgeschwindigkeit von einer der erfassten Abgabeleistung oder von einer dem erfassten Blattwinkel zugeordneten Windgeschwindigkeit um eine vorbestimmte Mindestabweichungsgeschwindigkeit abweicht, **dadurch gekennzeichnet, dass** jeweils die Mindestabweichungsleistung, der Mindestabweichungswinkel oder die Mindestabweichungsgeschwindigkeit in Abhängigkeit von der Windgeschwindigkeit vorgegeben wird.

2. Verfahren nach Anspruch 1,
**dadurch gekennzeichnet, dass**
- zum Vergleichen der erfassten Betriebsgröße bzw. der erfassten Windgeschwindigkeit (V) mit der Referenzgröße
- die erfasste Abgabeleistung (P_{R}) mit einer Referenzleistung einer charakteristischen Betriebsleistungskurve der Windenergieanlage verglichen wird bzw. die erfasste Windgeschwindigkeit mit einer der erfassten Abgabeleistung über die charakteristische Betriebsleistungskurve zugeordneten Windgeschwindigkeit verglichen wird, wobei die charakteristische Betriebsleistungskurve eine als maximal angenommene Abgabeleistung (P_{R}) in Abhängigkeit der Windgeschwindigkeit angibt, und/oder
- der erfasste Blattwinkel mit einem Referenzwinkel einer charakteristischen Blattwinkelkurve der Windenergieanlage verglichen wird, bzw. die erfasste Windgeschwindigkeit mit einer dem erfassten Blattwinkel über die charakteristische Blattwinkelkurve zugeordnete Windgeschwindigkeit verglichen wird, wobei die charakteristische Blattwinkelkurve einen als optimal angenommenen Blattwinkel in Abhängigkeit der Windgeschwindigkeit (V) angibt,
wobei
- die Mindestabweichungsleistung, der Mindestabweichungswinkel bzw. die Mindestabweichungsgeschwindigkeit in Abhängigkeit der Windgeschwindigkeit vorgegeben werden.

3. Verfahren nach Anspruch 1 oder 2,
**dadurch gekennzeichnet, dass**
- in einem Übergangsbereich für Windgeschwindigkeiten
- oberhalb einer ersten Umschaltwindgeschwindigkeit, die kleiner als die Nennwindgeschwindigkeit (V_{N}) ist, und
- unterhalb einer zweiten Umschaltwindgeschwindigkeit, die größer als die Nennwindgeschwindigkeit ist,
- die erzeugte Abgabeleistung (P_{R}) und/oder der eingestellte Blattwinkel jeweils als eine Betriebsgröße erfasst werden.

4. Verfahren nach einem der vorstehenden Ansprüche,
**dadurch gekennzeichnet, dass**
- die charakteristische Blattwinkelkurve abhängig einer temporär vorgegebenen reduzierten Betriebsgrenze, insbesondere einer reduzierten Leistungsgrenze und/oder einer reduzierten Drehzahlgrenze vorgegeben wird und dass optional
- der vorbestimmte Mindestabweichungswinkel in Abhängigkeit der temporär vorgegebenen reduzierten Betriebsgrenze vorgegeben wird.

5. Verfahren nach einem der vorstehenden Ansprüche,
**dadurch gekennzeichnet, dass**
die Mindestabweichung (ΔPₘ) über eine windgeschwindigkeitsabhängige Abweichungskurve vorgegeben wird, wobei
- die Abweichungskurve einen Verlauf der Betriebsgröße in Abhängigkeit der Windgeschwindigkeit angibt und
- die Abweichungskurve jeweils um die Mindestabweichung von der Betriebsgrößenkurve abweicht, sodass sich ein variierender Abstand zwischen der Betriebsgrößenkurve und der Abweichungskurve ergibt,
- und/oder dass
- die Abweichungskurve vorzugsweise nicht um einen konstanten Windgeschwindigkeitswert zur Betriebsgrößenkurve verschoben ist, und/oder dass die Abweichungskurve um unterschiedlich große Windgeschwindigkeitswerte von der Betriebsgrößenkurve abweicht.

6. Verfahren nach einem der vorstehenden Ansprüche,
**dadurch gekennzeichnet, dass**
- im Teillastbetrieb eine bzw. die vorbestimmte Mindestabweichungsleistung bzw. eine bzw. die Mindestabweichungsgeschwindigkeit mit zunehmender Windgeschwindigkeit zunimmt, insbesondere ab einer ersten Anfangswindgeschwindigkeit oder einer Windgeschwindigkeitsrelevanzschwelle und/oder kontinuierlich zunimmt, und
- im Volllastbetrieb eine bzw. der vorbestimmte Mindestabweichungswinkel bzw. eine bzw. die Mindestabweichungsgeschwindigkeit mit zunehmender Windgeschwindigkeit zunächst abnimmt, insbesondere wenn die Windenergieanlage in einem nicht reduzierten Betrieb arbeitet, wobei vorzugsweise vorgesehen ist, dass
- der vorbestimmte Mindestabweichungswinkel bzw. eine bzw. die Mindestabweichungsgeschwindigkeit mit zunehmender Windgeschwindigkeit zumindest abschnittsweise zunimmt, wenn die Windenergieanlage in einem reduzierten Betrieb arbeitet, in dem die Abgabeleistung auf einen Leistungswert von 50% oder weniger einer Anlagennennleistung der Windenergieanlage reduziert ist.

7. Verfahren nach einem der vorstehenden Ansprüche,
**dadurch gekennzeichnet, dass**
die Windenergieanlage mittels einer Drehzahl-Leistungs-Kennlinie betrieben wird, bei der die Abgabeleistung der Windenergieanlage in Abhängigkeit einer erfassten Drehzahl des Rotors eingestellt wird.

8. Verfahren nach einem der vorstehenden Ansprüche,
**dadurch gekennzeichnet, dass**
auf einen Eisansatz an dem Rotorblatt nur dann erkannt wird, wenn
- eine erfasste Außentemperatur unterhalb einer vorbestimmten Maximaltemperatur liegt und optional oberhalb einer vorbestimmten Minimaltemperatur liegt, wobei vorzugsweise
- die vorbestimmte Maximaltemperatur von der Windgeschwindigkeit abhängig vorgegeben wird.

9. Verfahren nach einem der vorstehenden Ansprüche,
**dadurch gekennzeichnet, dass**
- die charakteristische Betriebsgrößenkurve im Betrieb der Windenergieanlage adaptiert wird, und/oder
- zur charakteristischen Betriebsgrößenkurve im Betrieb der Windenergieanlage Betriebsabweichungen erfasst werden, die Abweichungen einer erfassten Betriebsgröße gegenüber einer Betriebsgröße gemäß der charakteristischen Betriebsgrößenkurve bezeichnen, und die nicht auf einen Eisansatz am Rotorblatt zurückzuführen sind, und wobei
- die Mindestabweichung jeweils so gewählt wird, dass sie dem Betrage nach größer als die entsprechende Betriebsabweichung ist, wobei insbesondere
- die Abweichungskurve so gewählt und/oder verändert wird, dass die Betriebsgrößenkurve mit den Betriebsabweichungen die Abweichungskurve nicht unterschreitet, und optional
- die Betriebsabweichungen als Standardabweichungen erfasst werden, und/oder
- die Betriebsabweichungen als Abweichungsband zusammengefasst werden und die Abweichungskurve so gewählt und/oder verändert wird, dass sie, bezogen auf die Werte der Betriebsgröße, unterhalb des Abweichungsbandes liegt, und/oder
- die jeweilige Mindestabweichung bzw. die Abweichungskurve im Betrieb der Windenergieanlage adaptiert wird, insbesondere in Abhängigkeit der adaptierten charakteristischen Betriebsleistungskurve und/oder in Abhängigkeit der erfassten Betriebsabweichungen.

10. Verfahren nach einem der vorstehenden Ansprüche,
**dadurch gekennzeichnet, dass**
die jeweilige Mindestabweichung bzw. die Abweichungskurve von einer Umgebungstemperatur der Windenergieanlage abhängig vorgegeben wird.

11. Verfahren nach einem der vorstehenden Ansprüche,
**dadurch gekennzeichnet, dass**
- die jeweilige Mindestabweichung bzw. die Abweichungskurve zusätzlich zur Windgeschwindigkeit von wenigstens einer weiteren Eigenschaft des auf den Rotor wirkenden Windes abhängig vorgegeben wird, insbesondere ausgewählt aus den Eigenschaften der Liste aufweisend
- eine Turbulenzintensität des Windes,
- eine vertikale Scherung des Windes,
- eine horizontale Scherung des Windes,
- eine Windrichtung und
- eine Windrichtungsänderung über der Höhe und/oder dass
- die weiteren Eigenschaften des auf den Rotor wirkenden Windes Windfeldparameter bilden und der Wind in Abhängigkeit wenigstens eines Teils dieser Windfeldparameter W klassifiziert wird und abhängig dieser Klassifizierung die Mindestabweichung vorbestimmt wird.

12. Verfahren nach einem der vorstehenden Ansprüche,
**dadurch gekennzeichnet, dass**
die jeweilige Mindestabweichung bzw. die Abweichungskurve von einem Blattprofil des Rotorblattes abhängt.

13. Verfahren nach einem der vorstehenden Ansprüche,
**dadurch gekennzeichnet, dass**
zum Erkennen auf einen Eisansatz in einem vorgegebenen Prüfzeitraum mehrfach geprüft wird, ob die erfasste Betriebsgröße bzw. die erfasste Windgeschwindigkeit von dem Referenzwert wenigstens um eine vorbestimmte Mindestabweichung abweicht, und nur dann von einem Eisansatz ausgegangen wird, wenn die Prüfung mehrfach positiv war, insbesondere in dem vorgegebenen Prüfzeitraum überwiegend positiv war.

14. Verfahren nach einem der vorstehenden Ansprüche,
**dadurch gekennzeichnet, dass**
- von einem unteren Windgeschwindigkeitsbereich, der von einer Anlaufwindgeschwindigkeit (V_{A}), bei der die Windenergieanlage anläuft, oder von einer Windgeschwindigkeitsrelevanzschwelle, die eine Windgeschwindigkeit oberhalb der Anlaufwindgeschwindigkeit (V_{A}) bezeichnet und insbesondere Werte bis zu 4m/s oder 5m/s aufweist, bis zu einer Nennwindgeschwindigkeit reicht, drei gleich große Abschnitte betrachtet werden, von denen
- ein erster Windgeschwindigkeitsabschnitt von der Anlaufwindgeschwindigkeit (V_{A}) bis zu einer ersten Abschnittswindgeschwindigkeit reicht,
- ein zweiter Windgeschwindigkeitsabschnitt von der ersten Abschnittswindgeschwindigkeit bis zu einer zweiten Abschnittswindgeschwindigkeit reicht, und
- ein dritter Windgeschwindigkeitsabschnitt von der zweiten Abschnittswindgeschwindigkeit bis zur Nennwindgeschwindigkeit reicht, wobei
- die Mindestabweichung in jedem der drei Windgeschwindigkeitsabschnitte mit steigender Windgeschwindigkeit zunimmt, und
- die Mindestabweichung (ΔPₘ) kontinuierlich vom ersten Windgeschwindigkeitsabschnitt bis zum dritten Windgeschwindigkeitsabschnitt mit steigender Windgeschwindigkeit zunimmt, und/oder
- eine mittlere Mindestabweichung des dritten Windgeschwindigkeitsabschnitts wenigstens um 50% über einer mittleren Mindestabweichung des zweiten Windgeschwindigkeitsabschnitts liegt und/oder
- die mittlere Mindestabweichung des zweiten Windgeschwindigkeitsabschnitts wenigstens um 50% über einer mittleren Mindestabweichung des ersten Windgeschwindigkeitsabschnitts liegt.

15. Windenergieanlage mit wenigstens einem mit einer variablen Drehzahl betreibbaren Rotor mit wenigstens einem Rotorblatt, umfassend:
- eine Steuerungseinheit vorbereitet zum Erkennen eines Eisansatzes an dem wenigstens einen Rotorblatt,
- eine Windmesseinrichtung zum Erfassen einer Windgeschwindigkeit eines auf den Rotor wirkenden Windes,
- eine Erfassungseinrichtung zum Erfassen einer von der Windgeschwindigkeit abhängigen Betriebsgröße,
- einen Komparator zum Vergleichen der erfassten Betriebsgröße oder der erfassten Windgeschwindigkeit mit einer Referenzgröße einer charakteristischen windgeschwindigkeitsabhängigen Betriebsgrößenkurve der Windenergieanlage, wobei die charakteristische Betriebsgrößenkurve eine als optimal angenommene Betriebsgröße in Abhängigkeit der Windgeschwindigkeit angibt,
- eine Auswerteeinheit dazu vorbereitet, auf einen Eisansatz an dem Rotorblatt zu erkennen, wenn die erfasste Betriebsgröße bzw. die erfasste Windgeschwindigkeit von der Referenzgröße wenigstens um eine vorbestimmte Mindestabweichung abweicht, und
- eine Vorgabeeinheit, wobei die Vorgabeeinheit dazu vorbereitet ist, die Mindestabweichung in Abhängigkeit der Windgeschwindigkeit vorzugegeben, wobei
die Windenergieanlage, insbesondere die Steuerungseinheit, dazu vorbereitet ist, wenigstens ein Verfahren nach einem der Ansprüche 1 bis 14 auszuführen,
**dadurch gekennzeichnet, dass** jeweils die Mindestabweichungsleistung, der Mindestabweichungswinkel oder die Mindestabweichungsgeschwindigkeit in Abhängigkeit von der Windgeschwindigkeit vorgegeben wird.

## Claims

1. A method for detecting an accretion of ice on a rotor blade of a rotor of a wind turbine (100), wherein the rotor can be operated at a variable rotational speed, comprising the steps:
- recording a wind speed (V) of a wind acting upon the rotor,
- recording an operating variable that is dependent on the wind speed (V),
- comparing the recorded operating variable or the recorded wind speed (V) with a reference variable of a characteristic wind-speed-dependent operating-variable curve of the wind turbine (100), wherein the characteristic operating-variable curve indicates an operating variable assumed to be optimal in dependence on the wind speed (V),
- detecting an accretion of ice on the rotor blade if the recorded operating variable, or the recorded wind speed (V), deviates from the reference variable by at least a predetermined minimum deviation, wherein
- the minimum deviation is specified in dependence on the wind speed, wherein
- for wind speeds below a rated wind speed (V_{N}), an output power, generated by the wind turbine (100) from the wind is recorded as an operating variable,
- for wind speeds above a rated wind speed (V_{N}), a blade angle set to limit the output power is recorded as an operating variable, and
- an accretion of ice is detected if
- the recorded output power (P_{R}) deviates from the reference power by at least a predetermined minimum-deviation power, and/or
- the recorded blade angle deviates from the reference angle by at least a predetermined minimum-deviation angle, and/or
- the recorded wind speed deviates by a predetermined minimum-deviation speed from a wind speed assigned to the recorded output power or from a wind speed assigned to the recorded blade angle, **characterized in that**
the minimum-deviation power, the minimum-deviation angle or the minimum-deviation speed is in each case specified in dependence on the wind speed.

2. The method as claimed in claim 1,
**characterized in that**
- for the purpose of comparing the recorded operating variable, or the recorded wind speed (V), with the reference variable
- the recorded output power (P_{R}) is compared with a reference power of a characteristic operating-power curve of the wind turbine, or the recorded wind speed is compared with a wind speed assigned to the recorded output power via the characteristic operating-power curve, wherein the characteristic operating-power curve indicates an output power (P_{R}) assumed to be maximal in dependence on the wind speed, and/or
- the recorded blade angle is compared with a reference angle of a characteristic blade-angle curve of the wind turbine, or the recorded wind speed is compared with a wind speed assigned to the recorded blade angle via the characteristic blade-angle curve, wherein the characteristic blade-angle curve indicates a blade angle assumed to be optimal in dependence on the wind speed (V), wherein
- the minimum-deviation power, the minimum-deviation angle or the minimum-deviation speed are specified in dependence on the wind speed.

3. The method as claimed in claim 1 or 2,
**characterized in that**
- in a transition range for wind speeds
- above a first switchover speed, which is less than the rated speed (V_{N}), and
- below a second switchover speed, which is greater than the rated wind speed,
- the generated output power (P_{R}) and/or the set blade angle are each recorded as an operating variable.

4. The method as claimed in any one of the preceding claims,
**characterized in that**
- the characteristic blade-angle curve is specified depending on a temporarily specified reduced operating limit, in particular a reduced power limit and/or a reduced rotational-speed limit, and that optionally
- the predetermined minimum-deviation angle is specified in dependence on the temporarily specified reduced operating limit.

5. The method as claimed in any one of the preceding claims,
**characterized in that**
the minimum deviation (ΔPₘ) is specified via a wind-speed-dependent deviation curve, wherein
- the deviation curve indicates a behavior of the operating variable in dependence on the wind speed, and
- the deviation curve in each case deviates from the operating-variable curve by the minimum deviation, such that a varying distance is obtained between the operating-variable curve and the deviation curve,
- and/or that
- the deviation curve is preferably not shifted by a constant wind-speed value relative to the operating-variable curve, and/or that the deviation curve deviates from the operating-variable curve by wind speed values of differing magnitude.

6. The method as claimed in any one of the preceding claims,
**characterized in that**
- in partial-load operation a predetermined minimum-deviation power, or the predetermined minimum-deviation power, increases from a first start-up wind speed or a wind-speed-relevant threshold and/or continuously, and
- in full-load operation a predetermined minimum-deviation angle, or the predetermined minimum-deviation angle, initially decreases with increasing wind speed, in particular when the wind turbine is operating in a non-reduced mode, wherein it is preferably provided that
- the predetermined minimum-deviation angle, or a minimum-deviation speed or the minimum-deviation speed, increases at least portionally when the wind turbine is working in a reduced mode in which the output power has been reduced to a power value of 50 % or less of a rated power of the wind turbine.

7. The method as claimed in any one of the preceding claims,
**characterized in that**
the wind turbine is operated by means of a rotational-speed power characteristic, in which the output power of the wind turbine is set in dependence on a recorded rotational speed of the rotor.

8. The method as claimed in any one of the preceding claims,
**characterized in that**
an accretion of ice on the rotor blade is detected only if
- a recorded outside temperature is below a predetermined maximum temperature, and optionally above a predetermined minimum temperature, wherein preferably
- the predetermined maximum temperature is specified depending on the wind speed.

9. The method as claimed in any one of the preceding claims,
**characterized in that**
- the characteristic operating-variable curve is adapted during operation of the wind turbine, and/or
- for the characteristic operating-variable curve during operation of the wind turbine, operating deviations are recorded that indicate deviations of a recorded operating variable from an operating variable according to the characteristic operating-variable curve, and that are not due to an accretion of ice, and wherein
- the minimum deviation in each case is selected such that it is greater in magnitude than the corresponding operating deviation, wherein in particular
- the deviation curve is selected and/or changed such that the operating-variable curve with the operating deviations does not fall below the deviation curve and optional
- the operating deviations are recorded as standard deviations, and/or
- the operating deviations are combined as a deviation band, and the deviation curve is selected and/or changed such that it lies below the deviation band relative to the values of the operating variable, and/or
- the respective minimum deviation, or the deviation curve, is adapted during operation of the wind turbine, in particular in dependence on the adapted characteristic operating-power curve and/or in dependence on the recorded operating deviations.

10. The method as claimed in any one of the preceding claims,
**characterized in that**
the respective minimum deviation, or the deviation curve, is specified depending on an ambient temperature of the wind turbine.

11. The method as claimed in any one of the preceding claims,
**characterized in that**
- the respective minimum deviation, or the deviation curve, is specified depending, in addition to the wind speed, on at least one further property of the wind acting upon the rotor, in particular selected from the properties of the list that includes
- a turbulence intensity of the wind,
- a vertical shear of the wind,
- a horizontal shear of the wind,
- a wind direction and
- a change in wind direction over height, and/or that
- the further properties of the wind acting upon the rotor form wind-field parameters, and the wind is classified in dependence on at least some of these wind-field parameters W, and the minimum deviation is predetermined depending on this classification.

12. The method as claimed in any one of the preceding claims,
**characterized in that**
the respective minimum deviation, or the deviation curve, depends on a blade profile of the rotor blade.

13. The method as claimed in any one of the preceding claims,
**characterized in that**,
for the purpose of detecting an accretion of ice, it is checked several times in a predefined test period whether the recorded operating variable, or the recorded wind speed, deviates from the reference value by at least a predefined minimum deviation, and an accretion of ice is only assumed if the test was positive several times, in particular if it was predominantly positive in the predefined test period.

14. The method as claimed in any one of the preceding claims,
**characterized in that**,
- from a lower wind-speed range, which extends from a start-up wind speed (V_{A}) at which the wind turbine starts up, or from a wind-speed-relevant threshold, which denotes a wind speed above the start-up wind speed (V_{A}) and in particular has values up to 4 m/s or 5 m/s, to a rated wind speed, three equally sized sections are considered, of which
- a first wind-speed section extends from the start-up wind speed (V_{A}) to a first section wind speed,
- a second wind-speed section extends from the first section wind speed to a second section wind speed, and
- a third wind-speed section extends from the second section wind speed to the rated wind speed, wherein
- the minimum deviation in each of the three wind-speed sections increases with increasing wind speed, and
- the minimum deviation (ΔPₘ) increases continuously from the first wind-speed section to the third wind-speed section with increasing wind speed, and/or
- a mean minimum deviation of the third wind-speed section is at least 50 % above a mean minimum deviation of the second wind-speed section, and/or
- the mean minimum deviation of the second wind-speed section is at least 50 % above a mean minimum deviation of the first wind-speed section.

15. A wind turbine comprising at least one rotor that can be operated at a variable rotational speed and that has at least one rotor blade, comprising:
- a control unit configured to detect an accretion of ice on the at least one rotor blade,
- a wind measuring means for recording a wind speed of a wind acting upon the rotor,
- a recording means for recording an operating variable that is dependent on the wind speed,
- a comparator for comparing the recorded operating variable or the recorded wind speed with a reference variable of a characteristic wind-speed-dependent operating-variable curve of the wind turbine, wherein the characteristic operating-variable curve indicates an operating variable assumed to be optimal in dependence on the wind speed,
- an evaluation unit configured to detect an accretion of ice on the rotor blade if the recorded operating variable, or the recorded wind speed, deviates from the reference variable by at least a predetermined minimum deviation, and
- a specification unit, wherein the specification unit is configured to specify the minimum deviation in dependence on the wind speed, wherein
the wind turbine, in particular the control unit, is configured to execute at least one method as claimed in any one of claims 1 to 14, **characterized in that**
the minimum-deviation power, the minimum-deviation angle or the minimum-deviation speed is in each case specified in dependence on the wind speed.

## Revendications

1. Procédé d'identification d'une accumulation de glace sur une pale de rotor d'un rotor d'une éolienne (100), dans lequel le rotor peut fonctionner à une vitesse de rotation variable,
comprenant les étapes :
- de détection d'une vitesse du vent (V) d'un vent agissant sur le rotor,
- de détection d'une grandeur de fonctionnement dépendant de la vitesse du vent (V),
- de comparaison de la grandeur de fonctionnement détectée ou de la vitesse du vent (V) détectée à une grandeur de référence d'une courbe caractéristique de grandeurs de fonctionnement dépendant de la vitesse du vent de l'éolienne (100), dans lequel la courbe caractéristique de grandeurs de fonctionnement indique une grandeur de fonctionnement supposée optimale en fonction de la vitesse du vent (V),
- de détection d'une accumulation de glace sur la pale de rotor, lorsque la grandeur de fonctionnement détectée ou la vitesse du vent (V) détectée s'écarte de la grandeur de référence d'au moins un écart minimal prédéfini, dans lequel
- l'écart minimal est spécifié en fonction de la vitesse du vent, dans lequel
- une puissance de sortie produite à partir du vent par l'éolienne (100) est détectée en tant que grandeur de fonctionnement pour des vitesses du vent inférieures à une vitesse du vent nominale (V_{N}),
- un angle de pale réglé pour limiter la puissance de sortie est détecté en tant que grandeur de fonctionnement pour des vitesses du vent supérieures à une vitesse du vent nominale (V_{N}), et
- une accumulation de glace est identifiée lorsque
-- la puissance de sortie (P_{R}) détectée s'écarte de la puissance de référence d'au moins une puissance d'écart minimale prédéfinie, et/ou
-- l'angle de pale détecté s'écarte de l'angle de référence d'au moins un angle d'écart minimal prédéfini,
et/ou
-- la vitesse du vent détectée s'écarte d'une vitesse du vent associée à la puissance de sortie détectée ou d'une vitesse du vent associée à l'angle de pale détecté d'une vitesse d'écart minimale prédéfinie, **caractérisé en ce que**
la puissance d'écart minimale, l'angle d'écart minimal ou la vitesse d'écart minimale est spécifié(e) respectivement en fonction de la vitesse du vent.

2. Procédé selon la revendication 1,
**caractérisé en ce que**
- pour comparer la grandeur de fonctionnement détectée ou la vitesse du vent détectée (V) à la grandeur de référence,
-- la puissance de sortie (P_{R}) détectée est comparée à une puissance de référence d'une courbe caractéristique de puissances de fonctionnement de l'éolienne ou la vitesse du vent détectée est comparée une vitesse du vent associée à la puissance de sortie détectée au-dessus de la courbe caractéristique de puissances de fonctionnement, dans lequel la courbe caractéristique de puissances de fonctionnement indique une puissance de sortie (P_{R}) supposée maximale en fonction de la vitesse du vent, et/ou
-- l'angle de pale détecté est comparé à un angle de référence d'une courbe caractéristique d'angles de pale de l'éolienne, ou la vitesse du vent détectée est comparée à une vitesse du vent associée à l'angle de pale détecté au-dessus de la courbe caractéristique d'angles de pale, dans lequel la courbe caractéristique d'angles de pale indique un angle de pale supposé optimal en fonction de la vitesse du vent (V),
dans lequel
- la puissance d'écart minimale, l'angle d'écart minimal ou la vitesse d'écart minimale sont spécifiés en fonction de la vitesse du vent.

3. Procédé selon la revendication 1 ou 2,
**caractérisé en ce que**
- dans une zone de transition pour des vitesses du vent
- la puissance de sortie (P_{R}) produite et/ou l'angle de pale réglé sont détectés respectivement en tant qu'une grandeur de fonctionnement
-- au-dessus d'une première vitesse du vent de commutation, qui est inférieure à la vitesse du vent nominale (V_{N}), et
-- en dessous d'une deuxième vitesse du vent de commutation, qui est supérieure à la vitesse du vent nominale.

4. Procédé selon l'une quelconque des revendications précédentes,
**caractérisé en ce que**
- la courbe caractéristique d'angles de pale est spécifiée en fonction d'une limite de fonctionnement réduite temporairement spécifiée, en particulier d'une limite de puissance réduite et/ou d'une limite de vitesse de rotation réduite, et qu'en option
- l'angle d'écart minimal prédéfini est spécifié en fonction de la limite de fonctionnement réduite spécifiée temporairement.

5. Procédé selon l'une quelconque des revendications précédentes,
**caractérisé en ce que**
l'écart minimal (ΔPₘ) est spécifié au-dessus d'une courbe d'écarts dépendant de la vitesse du vent, dans lequel
- la courbe d'écarts indique un profil de la grandeur de fonctionnement en fonction de la vitesse du vent, et
- la courbe d'écarts s'écarte de la courbe de grandeurs de fonctionnement respectivement de l'écart minimal si bien qu'il en résulte une distance variant entre la courbe de grandeurs de fonctionnement et la courbe d'écarts,
- et/ou que
- la courbe d'écarts n'est pas décalée de préférence d'une valeur constante de vitesse du vent par rapport à la courbe de grandeurs de fonctionnement, et/ou que la courbe d'écarts s'écarte de la courbe de grandeurs de fonctionnement de valeurs de vitesse du vent à grandeurs différentes.

6. Procédé selon l'une quelconque des revendications précédentes,
**caractérisé en ce que**
- dans le mode de fonctionnement à régime partiel, une ou la puissance d'écart minimale prédéfinie ou une ou la vitesse d'écart minimale augmente au fur et à mesure que la vitesse du vent augmente, en particulier augmente en continu à partir d'une première vitesse du vent de départ ou d'un seuil d'importance de la vitesse du vent, et
- dans le mode de fonctionnement à plein régime, un ou l'angle d'écart minimal prédéfini ou une ou la vitesse d'écart minimale augmente tout d'abord au fur et à mesure que la vitesse du vent augmente, en particulier lorsque l'éolienne fonctionne dans un mode de fonctionnement non réduit, dans lequel de préférence il est prévu que
- l'angle d'écart minimal prédéfini ou une ou la vitesse d'écart minimale augmente au moins par tronçons au fur et à mesure que la vitesse du vent augmente lorsque l'éolienne fonctionne dans un mode de fonctionnement réduit, dans lequel la puissance de sortie est réduite sur une valeur de puissance de 50 % ou moins d'une puissance nominale de l'éolienne.

7. Procédé selon l'une quelconque des revendications précédentes,
**caractérisé en ce que**
l'éolienne fonctionne au moyen d'une courbe caractéristique de puissance-vitesse de rotation, pour laquelle la puissance de sortie de l'éolienne est réglée en fonction d'une vitesse de rotation détectée du rotor.

8. Procédé selon l'une quelconque des revendications précédentes,
**caractérisé en ce que**
est identifiée une accumulation de glace sur la pale de rotor alors seulement lorsque
- une température extérieure détectée est inférieure à une température maximale prédéfinie et est en option supérieure à une température minimale prédéfinie, dans lequel de préférence
- la température maximale prédéfinie est spécifiée en fonction de la vitesse du vent.

9. Procédé selon l'une quelconque des revendications précédentes,
**caractérisé en ce que**
- la courbe caractéristique de grandeurs de fonctionnement est adaptée lors du fonctionnement de l'éolienne, et/ou
- sont détectés, concernant la courbe caractéristique de grandeurs de fonctionnement lors du fonctionnement de l'éolienne, des écarts de fonctionnement, qui désignent des écarts d'une grandeur de fonctionnement détectée par rapport à une grandeur de fonctionnement selon la courbe caractéristique de grandeurs de fonctionnement et qui ne sont pas liés à une accumulation de glace sur la pale de rotor, et dans lequel
-- l'écart minimal est choisi respectivement de telle sorte qu'il est supérieur en termes de valeur à l'écart de fonctionnement correspondant, dans lequel en particulier
-- la courbe d'écarts est choisie et/ou modifiée de telle sorte que la courbe de grandeurs de fonctionnement ne dépasse pas avec les écarts de fonctionnement la courbe d'écarts, et en option
- les écarts de fonctionnement sont détectés en tant qu'écarts standard, et/ou
- les écarts de fonctionnement sont regroupés en tant que bande d'écarts et la courbe d'écarts est choisie et/ou modifiée de telle sorte qu'elle est inférieure à la bande d'écart en ce qui concerne les valeurs de la grandeur de fonctionnement, et/ou
- l'écart minimal respectif ou la courbe d'écarts est adapté(e) lors du fonctionnement de l'éolienne, en particulier en fonction de la courbe caractéristique de puissances de fonctionnement adaptée et/ou en fonction des écarts de fonctionnement détectés.

10. Procédé selon l'une quelconque des revendications précédentes,
**caractérisé en ce que**
l'écart minimal respectif ou la courbe d'écarts est spécifié(e) en fonction d'une température extérieure de l'éolienne.

11. Procédé selon l'une quelconque des revendications précédentes,
**caractérisé en ce que**
- l'écart minimal respectif ou la courbe d'écarts est spécifiée) en supplément en plus de la vitesse du vent en fonction d'au moins une autre propriété du vent agissant sur le rotor, en particulier choisie parmi les propriétés de la liste présentant
- une intensité de turbulence du vent,
- un cisaillement vertical du vent,
- un cisaillement horizontal du vent,
- une direction du vent, et
- une modification de direction du vent sur la hauteur, et/ou que
- les autres propriétés du vent agissant sur le rotor forment des paramètres de champ du vent et le vent est classé en fonction d'au moins une partie desdits paramètres de champ du vent W et l'écart minimal est prédéfini en fonction de ce classement.

12. Procédé selon l'une quelconque des revendications précédentes,
**caractérisé en ce que**
l'écart minimal respectif ou la courbe d'écarts dépend d'un profil de pale de la pale de rotor.

13. Procédé selon l'une quelconque des revendications précédentes,
**caractérisé en ce que**
il est vérifié, pour identifier une accumulation de glace à maintes reprises pendant une période de vérification spécifiée, si la grandeur de fonctionnement détectée ou la vitesse du vent détectée s'écarte de la valeur de référence d'au moins un écart minimal prédéfini et on suppose alors seulement une accumulation de glace lorsque la vérification était positive à maintes reprises, en particulier était majoritairement positive dans la période de vérification spécifiée.

14. Procédé selon l'une quelconque des revendications précédentes,
**caractérisé en ce que**
- d'une plage inférieure de vitesses du vent, qui va d'une vitesse du vent de démarrage (V_{A}), à laquelle l'éolienne démarre, ou d'un seuil d'importance de vitesse du vent, qui désigne une vitesse du vent au-dessus de la vitesse de démarrage (V_{A}) et présente en particulier des valeurs jusqu'à 4 m/s ou 5 m/s, jusqu'à une vitesse du vent nominale, trois tronçons de même taille sont pris en compte, dont
-- un premier tronçon de vitesse du vent va de la vitesse du vent de démarrage (V_{A}) jusqu'à une première vitesse du vent de tronçon,
-- un deuxième tronçon de vitesse du vent va de la première vitesse du vent de tronçon jusqu'à une deuxième vitesse du vent de tronçon, et
- un troisième tronçon de vitesse du vent va de la deuxième vitesse du vent de tronçon jusqu'à la vitesse du vent nominale, dans lequel
-- l'écart minimal dans chacun des trois tronçons de vitesse du vent augmente au fur et à mesure que la vitesse du vent augmente, et
-- l'écart minimal (ΔPₘ) augmente en continu depuis le premier tronçon de vitesse du vent jusqu'au troisième tronçon de vitesse du vent au fur et à mesure que la vitesse du vent augmente, et/ou
-- un écart moyen minimal du troisième tronçon de vitesse du vent est supérieur d'au moins 50 % à un écart moyen minimal du deuxième tronçon de vitesse du vent, et/ou
-- l'écart moyen minimal du deuxième tronçon de vitesse du vent est supérieur d'au moins 50 % à un écart moyen minimal du premier tronçon de vitesse du vent.

15. Eolienne avec au moins un rotor pouvant fonctionner à une vitesse de rotation variable avec au moins une pale de rotor, comprenant :
- une unité de commande préparée pour identifier une accumulation de glace sur l'au moins une pale de rotor,
- un dispositif de mesure du vent destiné à détecter une vitesse du vent d'un vent agissant sur le rotor,
- un dispositif de détection destiné à détecter une grandeur de fonctionnement dépendant de la vitesse du vent,
- un comparateur destiné à comparer la grandeur de fonctionnement détectée ou la vitesse du vent détectée à une grandeur de référence d'une courbe caractéristique de grandeurs de fonctionnement dépendant de la vitesse du vent de l'éolienne, dans laquelle la courbe caractéristique de grandeurs de fonctionnement indique une grandeur de fonctionnement supposée optimale en fonction de la vitesse du vent,
- une unité d'évaluation préparée pour identifier une accumulation de glace sur la pale de rotor lorsque la grandeur de fonctionnement détectée ou la vitesse du vent détectée s'écarte de la grandeur de référence d'au moins un écart minimal prédéfini, et
- une unité de spécification, dans laquelle l'unité de spécification est préparée pour spécifier l'écart minimal en fonction de la vitesse du vent,
dans laquelle
l'éolienne, en particulier l'unité de commande, est préparée pour exécuter au moins un procédé selon l'une quelconque des revendications 1 à 14,
**caractérisée en ce que**
respectivement la puissance d'écart minimale, l'angle d'écart minimal ou la vitesse d'écart minimale est spécifié(e) en fonction de la vitesse du vent.
